# EUROPEAN PATENT SPECIFICATION

(11) **EP 4 291 025 B1**
(45) Date of publication and mention of the grant of the patent: **02.12.2026**
(21) Application number: 21710855.4
(22) Date of filing: 09.02.2021
(51) Int. Cl.: A01M 23/38

(54) **ADAPTABLE BAIT STATION**
ANPASSBARE KÖDERSTATION
STATION D'APPÂT ADAPTABLE

(43) Date of publication of application: 20.12.2023
(73) Proprietor: Rentokil Initial 1927 PLC, Crawley, West Sussex RH10 9PY (GB)
(72) Inventor: VICKERY, Ethan, Colleyville, Texas 76034 (US); AMICHAI, Ronen, Colleyville, Texas 76034 (US); RASMUSSEN, Jay, Colleyville, Texas 76034 (US); SEIFER, Shmuel, Colleyville, Texas 76034 (US)
(74) Representative: Abel & Imray LLP
(86) International application number: PCT/US2021/070135
(87) International publication number: WO 2022/173519

(56) References cited:
- CN-A- 111 093 368
- US-A1- 2021 022 333

## Description

### BACKGROUND

### 1. Field of the Disclosure

The present disclosure is generally related to devices, systems, and methods for pest (e.g., rodent) management, including adaptable bait stations for detecting pests.

### 2. Description of Related Art

Pest-management devices, such as rodent snap-traps, are designed to capture unwanted pests, such as rodents. Such devices often fail to provide an indication, independent of manual inspection by a user, that a particular device has operated. When multiple pest-management devices, such as hundreds or thousands of pest-management devices, are deployed, manual inspection of each device becomes time intensive and costly.

To address a lack of remote notification of pest-management devices, a detection and communication system can be purchased and installed to existing pest-management devices. However, such detection and communication systems can be difficult and time consuming to install. Additionally, if a detection component is not properly installed on a particular pest-management device, a user may not be remotely informed of operation of the particular pest-management device. Further, such add-on detection and communication systems typically have several wires that remain exposed to environmental conditions and to pests after installation. Exposed wires can deteriorate due to environmental conditions and can be chewed on by pests thus resulting in damage or failure of the detection and communication system.

Other attempts to address remote notification of operation of a pest-management device have included all-in-one products that include a detection and communication system are integrated in the pest-management device (e.g., bait station). Such integrated pest-management devices suffer from an increased cost of an all-in-one design and are difficult or impossible to repair if a one or more components fail. In the event of a failure of a single component, such as the detection or communication system, a user is forced to discard the entire integrated pest-management device and purchase a new device. Further, such products are not customizable or easily adaptable to detect specific pests (e.g., rodents vs insects). Relevant state of the art in the field are for example the documents: US 2021/022333 A1, CN 111 093 368 A.

### SUMMARY

This disclosure describes devices, systems, and methods associated with pest (e.g., rodent) management. An example of a pest-management apparatus includes a detector device having a base station including a plurality of sensors coupled to a base housing and a secondary station including a camera coupled to a secondary housing. The camera is configured to be activated in response to sensor data from one or more of the plurality of sensors and/or remote image capture requests. The base station and secondary station are removable coupled together and may operation independently or in conjunction with one another to provide an indication (e.g., visual indication, or electronic transmission) of an operation of a pest management system. Base station and/or secondary station may include, a processor, a wireless communication interface, circuitry, or the like, disposed within a cavity of the housing. In some implementations, secondary station may include light sources, housed within recessed portions of housing, configured to illuminate a target area upon activation of the camera.

In some implementations, the detector device has artificial intelligence (AI) based image detection software. In some implementations, the detector device has no exposed wires outside of the housing. The detector device is configured to be coupled to a pest-management device (e.g., bait station). The pest-management device may include a trap, such as a rodent snap-trap or a trap disposed within a bait station. The circuitry is configured to detect operation of the trap based on one or more sensors. In response to detection of the operation of the trap, the circuitry may capture an image, initiate transmission (e.g., wired and/or wireless transmission) of a notification, or both. In some implementations, the resulting image may be transmitting to a server, or other electrical device, where a pest detection program may identify one or more pests in the image.

The above-described aspects include the benefit of increased speed and ease of deployment of a pest-management apparatus and a reduction in time and manpower to identify pest-management apparatuses that have operated. To illustrate, components and devices of the pest-management apparatus are configured to be removably coupled from each other and, when coupled, enable proper function and interaction between different components. In this manner, the present disclosure provides a pest-management system with "plug and play" components that provide a high degree of user customization. For example, a user may easily arrange one or more components to form a multi-trap pest-management apparatus that includes individual trap operation detection as well as remote notification of individual trap operation. Furthermore, the above-described aspects provide components that can be combined with a variety of other components to enable a user to achieve different pest-management device configurations. Additionally, the above-described aspects provide a pest-management apparatus, such as a bait station, that includes components or devices that can repaired or replaced without having to discard the entire pest-management apparatus resulting in cost saving. Additionally, the above-described aspects include a pest-management apparatus with no exposed wires that can be chewed on and damaged by a pest.

As used herein, various terminology is for the purpose of describing particular implementations only and is not intended to be limiting of implementations. For example, as used herein, an ordinal term (e.g., "first," "second," "third," etc.) used to modify an element, such as a structure, a component, an operation, etc., does not by itself indicate any priority or order of the element with respect to another element, but rather merely distinguishes the element from another element having a same name (but for use of the ordinal term). The term "coupled" is defined as connected, although not necessarily directly, and not necessarily mechanically; two items that are "coupled" may be unitary with each other. The terms "a" and "an" are defined as one or more unless this disclosure explicitly requires otherwise. The term "substantially" is defined as largely but not necessarily wholly what is specified (and includes what is specified; e.g., substantially 90 degrees includes 90 degrees and substantially parallel includes parallel), as understood by a person of ordinary skill in the art. In any disclosed embodiment, the term "substantially" may be substituted with "within [a percentage] of" what is specified, where the percentage includes .1, 1, or 5 percent; and the term "approximately" may be substituted with "within 10 percent of" what is specified. The phrase "and/or" means and or or. To illustrate, A, B, and/or C includes: A alone, B alone, C alone, a combination of A and B, a combination of A and C, a combination of B and C, or a combination of A, B, and C. In other words, "and/or" operates as an inclusive or. Unless stated otherwise, the term "or" refers to an inclusive or and is interchangeable with the term "and/or."

The terms "comprise" (and any form of comprise, such as "comprises" and "comprising"), "have" (and any form of have, such as "has" and "having"), and "include" (and any form of include, such as "includes" and "including"). As a result, an apparatus that "comprises," "has," or "includes" one or more elements possesses those one or more elements, but is not limited to possessing only those one or more elements. Likewise, a method that "comprises," "has," or "includes" one or more steps possesses those one or more steps, but is not limited to possessing only those one or more steps.

Any aspect of any of the systems, methods, and article of manufacture can consist of or consist essentially of - rather than comprise/have/include - any of the described steps, elements, and/or features. Thus, in any of the claims, the term "consisting of" or "consisting essentially of" can be substituted for any of the open-ended linking verbs recited above, in order to change the scope of a given claim from what it would otherwise be using the open-ended linking verb. Additionally, it will be understood that the term "wherein" may be used interchangeably with "where."

Further, a device or system that is configured in a certain way is configured in at least that way, but it can also be configured in other ways than those specifically described. The feature or features of one embodiment may be applied to other embodiments, even though not described or illustrated, unless expressly prohibited by this disclosure or the nature of the embodiments.

Some details associated with the aspects of the present disclosure are described above, and others are described below. Other implementations, advantages, and features of the present disclosure will become apparent after review of the entire application, including the following sections: Brief Description of the Drawings, Detailed Description, and the Claims.

### BRIEF DESCRIPTION OF THE DRAWINGS

The following drawings illustrate by way of example and not limitation. For the sake of brevity and clarity, every feature of a given structure is not always labeled in every figure in which that structure appears. Identical reference numbers do not necessarily indicate an identical structure. Rather, the same reference number may be used to indicate a similar feature or a feature with similar functionality, as may non-identical reference numbers. The figures are drawn to scale (unless otherwise noted), meaning the sizes of the depicted elements are accurate relative to each other for at least the embodiment depicted in the figures. Views identified as schematics are not drawn to scale.
**FIG. 1** is a diagram that that illustrates a block diagram of an example of a pest-management system including a detector device.
**FIG. 2A** is a perspective view of an example of a pest-management system including a detector device.
**FIG. 2B** is a perspective view of the pest-management system of FIG. 2A including a secondary station.
**FIG. 3A** is a front view of an example of a detector device in a first configuration.
**FIGs. 3B-3C** are front perspective views of the detector device of FIG. 3A in a second configuration.
**FIGs. 3D-3E** are front and side views, respectively, of the detector device of FIG. 3A in the second configuration.
**FIGs. 3F-3G** are front and rear perspective views, respectively, of the detector device of FIG. 3A in a third configuration.
**FIGs. 3H-3I** are side and top views, respectively, of the detector device of FIG. 3A in the third configuration.
**FIGs. 4A-4B** are front and rear views, respectively, of the detector device of FIG. 3A used with a first pest apparatus.
**FIGs. 4C-4D** are collapsed and exploded views, respectively, of the detector device of FIG. 3A used with a second pest apparatus.
**FIGs. 4E-4F** are views of the detector device of FIG. 3A used with a third pest apparatus in a closed and open configuration, respectively.
**FIGs. 4G-4H** are views of the detector device of FIG. 3A used with a bait container.
**FIG. 5** is a block diagram that illustrates aspects of an illustrative pest-management system including a detector device.
**FIG. 6** is a block diagram that illustrates aspects of another illustrative pest-management system including a detector device.
**FIGs. 7A-7B** are front and rear views, respectively, of an example of a detector device.
**FIG. 7C** is an exposed view of the detector device of FIG. 7A.
**FIG. 7D** is a perspective view of the detector device of FIG. 7A in a first configuration.
**FIG. 7E** is a top view of an example of a pest-management system including the detector device of FIG. 7A.
**FIG. 8** is an image that illustrates an example of an image captured and modified by a pest-management system.
**FIG. 9** is an image that illustrates another example of an image captured and modified by a pest-management system.
**FIGs. 10-13** are images that illustrate an example of captured images by a pest-management system.
**FIG. 14** is a flow diagram of an example of a method of operation of a device or server of a pest-management system.
**FIG. 15** is a flow diagram of an example of a method of operation of a server of a pest-management system.
**FIG. 16** is a flow diagram of an example of a method of operation for artificial intelligence based pest identification.

### DETAILED DESCRIPTION OF ILLUSTRATIVE EMBODIMENTS

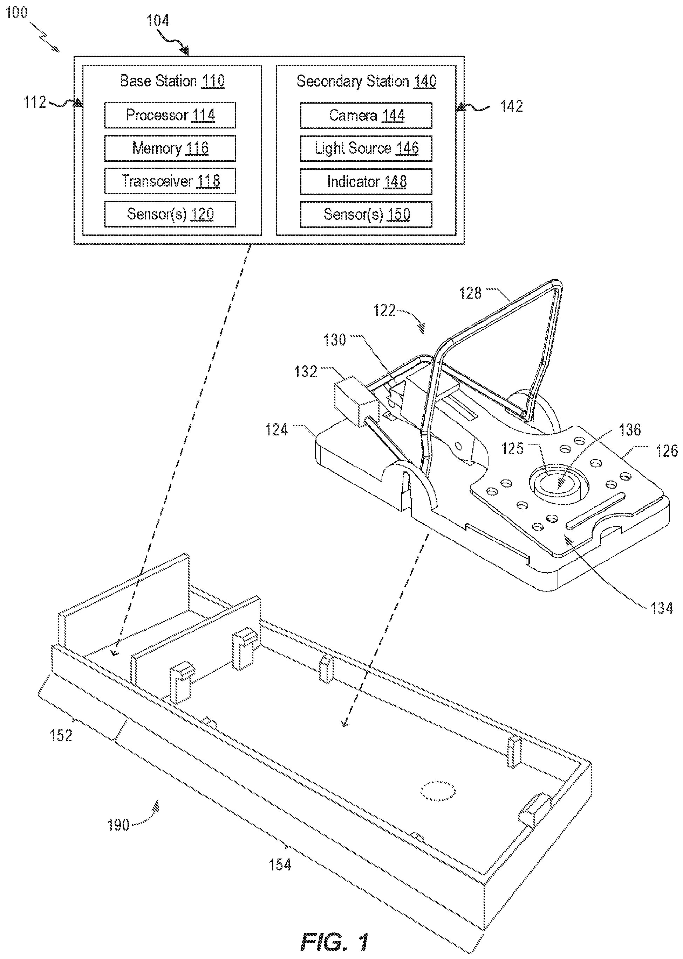

Referring now to the figures, and more particularly to FIG. 1, an isometric view of an example of a pest-management device 100 (e.g., a pest-management apparatus of a pest-management system) is depicted. Pest-management device 100 ("PMD") includes a detector device 104. In some implementations, PMD 100 includes detector device 104, a trap 122 (e.g., a snap-trap), and/or a platform 190. Platform 190 is configured to be removably couplable to either or both of detector device 104 and trap 122, as described further herein.

Detector device 104 (e.g., a monitoring system) includes a base station 110 and a secondary station 140 (e.g., image detection station). Although shown as having both base station 110 and secondary station 140, some implementation of detector device may include only base station 110. Detector device 104 is configured to, at least in part, detect a pest (e.g., insect, rodent, or other animal) or detect actuation of trap 122.

Base station 110 includes a housing 112 (e.g., that defines a cavity), a processor 114, a memory 116, a transceiver 118, and one or more sensor(s) 120. In some implementations, base station may include one or more additional components, such as, for example, circuitry, one or more switches, one or more light sources, a power source, antenna, input/output (I/O) devices, protrusion, fasteners, other connections, or the like. Base station 110 is configured to detect (e.g., via sensors 120) actuation of trap 122 and transmit (e.g., via transceiver 118) a notification that the trap has been actuated.

Processor 114 may be a central processing unit (CPU) or other computing circuitry (e.g., a microcontroller, one or more application specific integrated circuits (ASICs), and the like) and may have one or more processing cores. The memory 116 may include read only memory (ROM) devices, random access memory (RAM) devices, one or more hard disk drives (HDDs), flash memory devices, solid state drives (SSDs), other devices configured to store data in a persistent or non-persistent state, or a combination of different memory devices. The memory 116 may store instructions that, when executed by processor 114, cause the processor to perform one or more operations described herein. For example, processor 114 may be configured to initiate transmission of a notification based on receiving an input from sensor 120 that is associated with actuation of trap 122. Transceiver 118 may include any suitable device configured to receive (e.g., receiver) or transmit (e.g., transmitter) signals between devices. Transceiver 118 may include multiple distinct components or can include a single unitary component. In a non-limiting example, transceiver may include or correspond to a wireless interface configured to enable wireless communication between base station 110 and another device. In some such implementations, the wireless interfaces may include a LoRa interface, a Wi-Fi interface (e.g., an IEEE 802.11 interface), a cellular interface, a Bluetooth interface, a BLE interface, a Zigbee interface, another type of low power network interface, or the like. Additionally, or alternatively, transceiver may send and receive information over a network (e.g., LAN, WAN, the Internet, or the like) via any suitable communication path.

Sensor 120 may include any suitable device (e.g., switch, circuity, or the like) for initiating activation of trap 122, detecting actuation of the trap, or detecting the presence of a pest. For example, sensor 120 may include an activation switch (e.g., push button) that is configured to be depressed by activation of trap 122. As a non-limiting illustrative example, when trap 122 is in a position (e.g., set position) and the trap does not contact sensor 120, as an activation switch, the sensor is in or transitions to an electrically conductive state (i.e., an on state or a closed state). When trap 122 moves to a position (e.g., activated position) and the trap contacts sensor 120, the sensor is in or transitions to a non-electrically conductive state (i.e., an off state or an open state). Additionally, or alternatively, sensor 120 may include a magnetic switch, such as a reed switch, as an illustrative, non-limiting example. In some such implementations, sensor 120, as a magnetic sensor, is configured to operate responsive to a magnetic field, such as a magnetic field generated by a magnet (e.g., a permanent magnet or an electromagnet) or a another device. To illustrate, an operational region of sensor 120, such as a reed switch, is configured such that a magnet (e.g., magnet 132 coupled to trap 122) having a designated magnetic field strength can operate sensor 120 when the magnet is within a threshold distance to the operational region. For example, when the magnet is within the threshold distance and sensor 120 receives the designated magnetic field strength of the magnet field, the sensor is in or transitions to an electrically conductive state. When the magnet is not within the threshold distance and sensor 120 does not receive the designated magnetic field strength of the magnet field, the sensor is in or transitions to a non-electrically conductive state.

As shown, sensor 120 is included in (e.g., integrated in) housing 112. However, in other implementations, sensor 120 is removably coupled to housing 112. For example, an electrical connection (e.g., a port) can be incorporated into housing 112, and sensor 120 can be physically coupled to the housing via the port. Sensor 120 may be connected to one or more other components of base station 110 via circuitry (e.g., electrical wire, conductor, etc.).

As shown in FIG. 1, trap 122 is a snap-trap (e.g., a rodent snap-trap) having a base 124, a capture element 128 (e.g., a hammer, a bar, a jaw, etc.), a trigger 126, a latch 130 (e.g., a release catch), and a magnet 132. In some implementations, base 124 may, but need not, include an opening 125 that defines a channel 136 through which a screw or other device (e.g., one or more fasteners) may be inserted to anchor trap 122 to platform 190, or other device. In other implementations, trap 122 may be secured or otherwise anchored in another manner, such as an adhesive, as an illustrative, non-limiting example. Capture element 128, also referred to herein as a capture bar, is pivotally coupled to base 124 such that a portion of capture element 128 is biased toward a capture portion 134 of base 124. Capture element 128 may be biased toward the capture position via a biasing member (not shown), such as, for example, a spring.

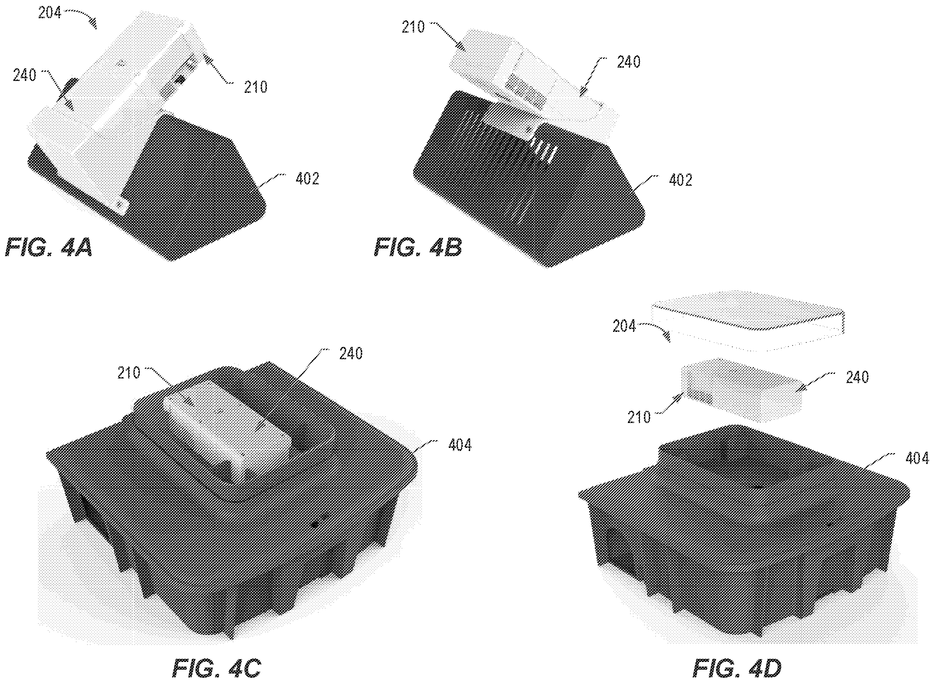

As shown, capture element 128 is in a set position in which capture element 128 is held in position by latch 130. For example, capture element 128 is configured to be pivoted away from the capture portion 134 to the set position in which the portion of capture element 128, upon release (by latch 130) of capture element 128 from the set position, travels toward capture portion 134. To illustrate, latch 130 is configured to retain capture element 128 in the set position such that movement of trigger 126 may cause latch 130 to release, thereby enabling movement of capture element 128 toward capture portion 134. In other implementations, trap 122 may include an electric trap, an adhesive mat, or another a pest-capture device (e.g., shown in FIGs. 4A-4F). Base 124 of trap 122 is configured to be coupled to housing 106 such that, upon the release of capture element 128 from the set position, the magnetic field (of magnet 132) causes an operation of sensor 120. For example, in some implementations, base 124 is configured to be coupled to housing 112 via platform 190. With respect to housing 112 being directly coupled to platform 190, in a particular implementation, detector device 104 (e.g., housing 112 of base station 110) may include one or more brackets, protrusions or the like that are configured to engage platform 190, such that detector device 104 (e.g., base station 110 or secondary station 140) is directly, and removably, coupled to platform 190.

In some implementations, detector device 104 may, but need not, include a secondary station 140. Secondary station 140 may include additional components that are adapted to a particular trap (e.g., 122) or for capture/detection of a particular pest. As shown in FIG. 1, secondary station 140 includes a housing 142, camera 144, one or more light sources 146, an indicator 148, and/or one or more sensors 150. The components (e.g., 144-150) of secondary station 140 may be disposed within, or coupled to, housing 142. Although not shown in FIG. 1, secondary station 140 may also include one or more internal components, which are not shown for convenience, such as a processor, a memory, one or more wireless interfaces, a battery, or a combination thereof.

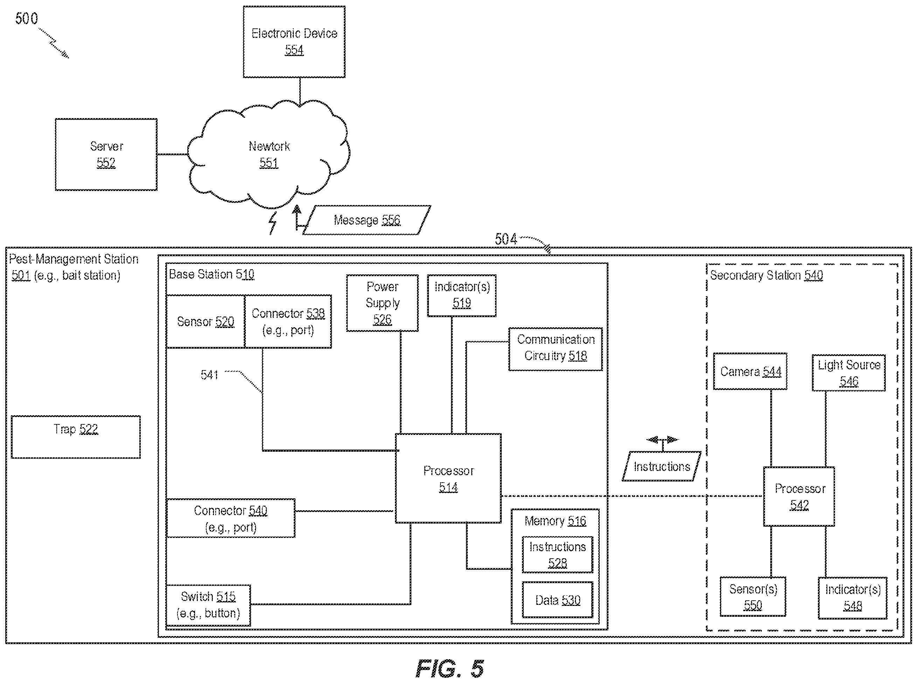

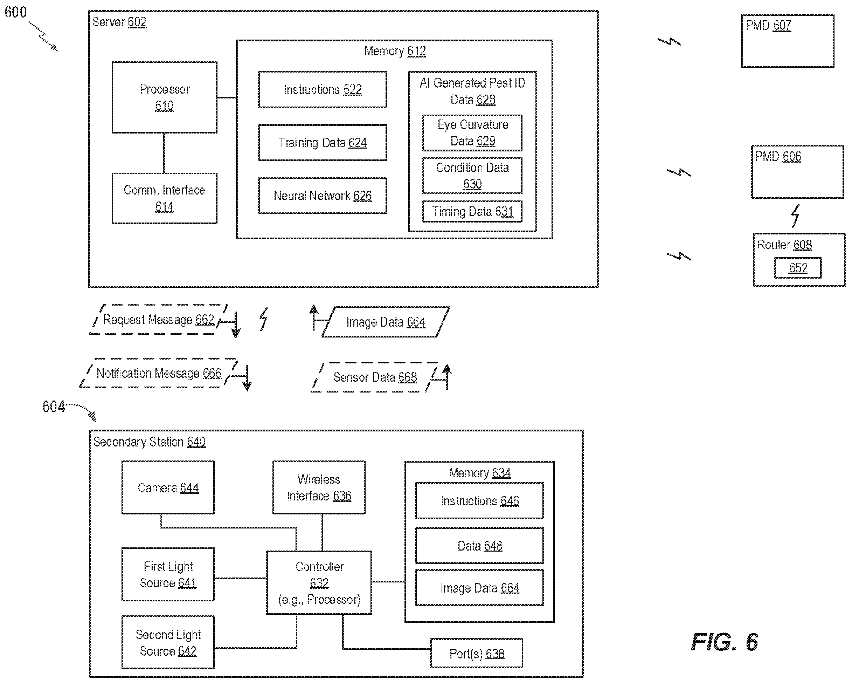

Camera 144 includes one or more image sensors (e.g., a charge coupled device (CCD) and is configured to capture image data. Camera 144 may include or correspond to a digital camera or a digital video camera in some implementations. Camera 144 is configured to capture an image, generate image data, responsive to one or more different indications and/or conditions. For example, in some implementations, camera 144 is configured to capture an image, generate image data, responsive to one or more indications generated based on sensor data from one or more sensors (e.g., 120, 150) of the detector device 104. Additionally, or alternatively, camera 144 is configured to capture an image responsive to receiving an image capture command, such as from an input button (e.g., switch) on the housing (e.g., 112, 142) of detector device 104, or from a remote device (e.g., 552 or 554). In some such implementations, the camera 144 may be configured to operate in one or more modes, such as an on demand mode, a timer mode, a request mode, or a combination thereof. In some implementation, camera 144 is configured to capture multiple images in succession. In some such implementations, camera 144 may include or correspond to a video camera. Additional details on the camera 111 and the operations thereof, are described further with reference to FIGs. 5 and 6.

Light source 146 may include a single light source or a plurality of light sources operating independently or, alternatively, operating together as a single, integrated light source. Light source 146 may be configured to emit ultraviolet light, visible light, infrared light or other light. In an illustrative example, light sources 146 may be activated (e.g., flash) based on operations of camera 144. To illustrate, secondary station 140 may utilize at least one of the light sources 146 as flash devices based on conditions, such as lighting conditions and direction. In one example, a non-visible light, such as infrared light, may be used to image a first area (e.g., near the periphery of device 104 or trap 122) to not scare away incoming pests and/or at night and a visible light may be used to image an second area (e.g., at or inside trap 122), such as when capturing images of a pest caught in the trap to provide higher quality images and identification of a captured pest or an empty trap.

Indicator 148 ("indicator device") is configured to indicate (e.g., visually indicate) a state of trap 122 to a user. For example, indicator device 148 may indicate whether trap 122 is in the set position or has been tripped (e.g., actuated). As shown, indicator 148 is incorporated into housing 106. Indicator 148 may be coupled to one or more other components of base station 110 or secondary station 140 via circuitry. In some implementations, indicator 148 includes a light emitting diode (LED), an audio speaker, a display device, or a combination thereof. In an implementation where indicator device 148 includes the LED, the LED may change in color, intensity, blinking frequency, or a combination thereof, in response to detection (e.g., via sensor 120) of a state of trap 122. For example, indicator device 148 may provide an indication in response to sensor 120 being activated (e.g., opening of closing of the sensor circuitry). In some implementations, indicator 148 may be configured to provide one or more indications as part of a configuration routine of device 104. For example, indicator 148 may be configured to provide a first set of one or more indications responsive to device 104 being activated (e.g., powered on), a second set of one or more indications responsive to device 104 being wirelessly coupled to another device, and/or a third set of one or more indications in response to detection of operation of trap 122, as illustrative, non-limiting examples.

Sensor 150 may include one or more sensors, such as a moisture sensor, a heat sensor, a vibration sensor, a power sensor, touch sensors, field sensors, motion sensors, or the like. As illustrative, non-limiting examples, passive infrared (PIR) sensors, active infrared sensors, or both, may be used as motion sensors. Sensor 150 may be configured to generate sensor data that may be used to perform one or operations of device 104, as described herein. To illustrate, the sensor data (e.g., when received by processor 114, or other component of device 104) may indicate a status of trap 122, whether to activate trap 122, whether to activate camera 534, or a combination thereof.

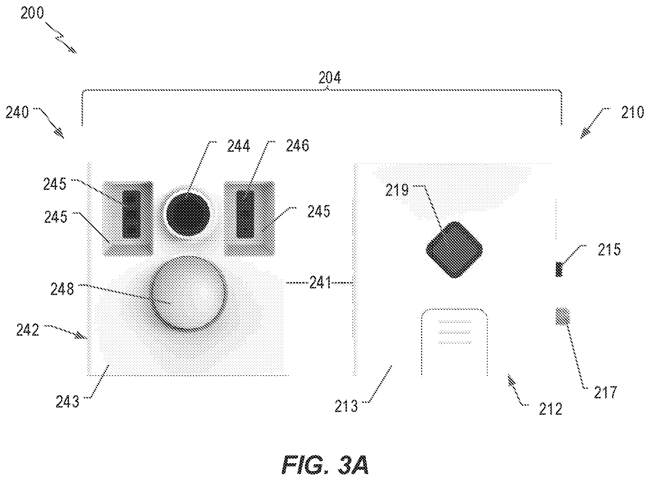

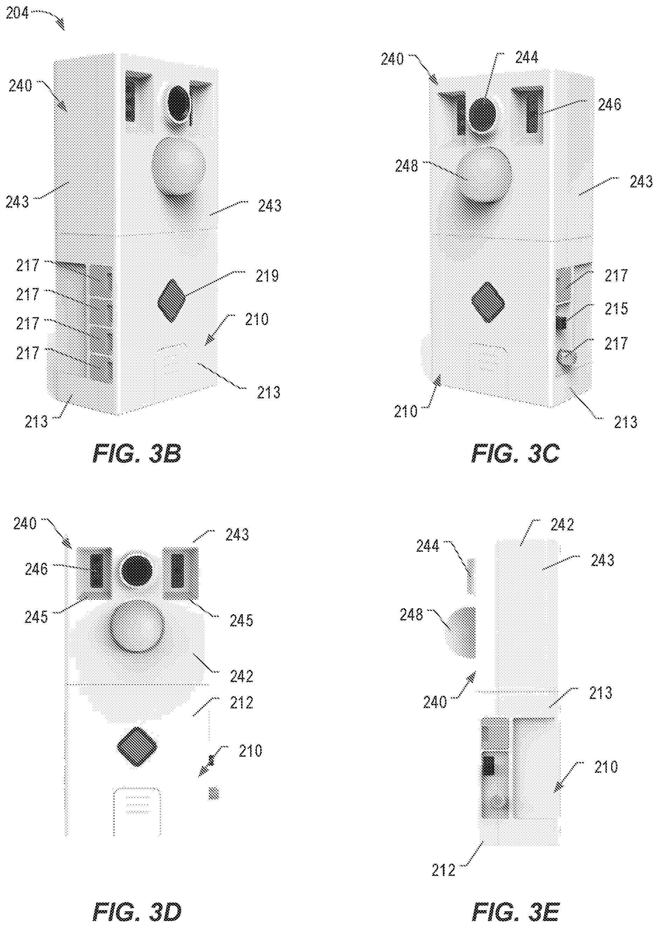

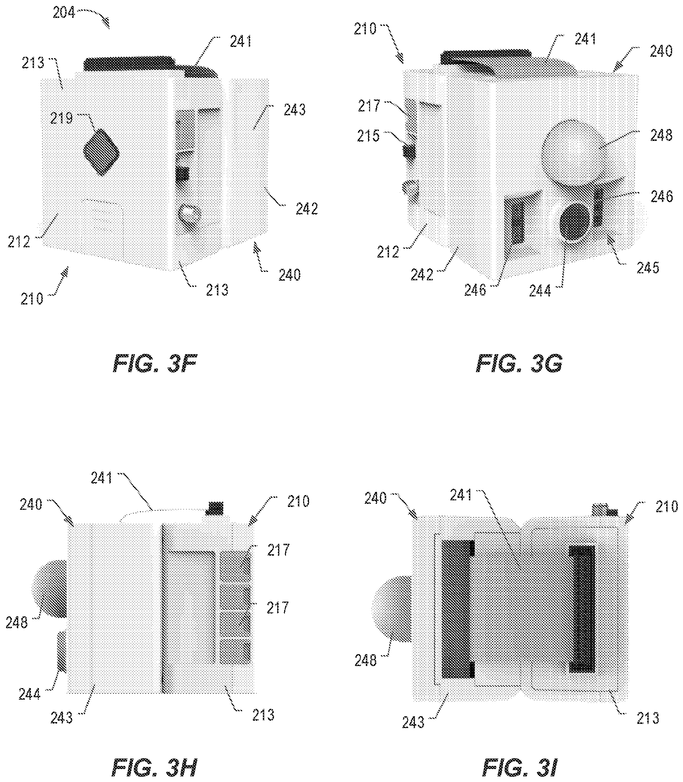

Secondary station 140 (e.g., housing 112) and base station 110 (e.g., housing 142) are stackable or may otherwise be coupled together in multiple configurations to best orient the components (e.g., camera 144, light source 146, sensor 150, etc.) of secondary station, as described further herein with reference to FIGs. 3A-3I. In some implementations, secondary station 140 and base station 110 may each be removably couplable to trap 122 and/or platform 190. As described, secondary station 140 and base station 110 may easily added or removed from PMD device 100 based on the aspects (e.g., location, type of pest, type of trap, frequency of use, etc.) of the PMD device. In this way, PMD device 100 is easily adaptable to a variety of environments by exchanging and orienting two components. Additionally, a suitable secondary station 140 (e.g., having components different from one other secondary station) may be selected based on the environment of the PMD device. This reduces inventory, decreases manufacturing costs, increases efficiency of maintenance, along with other advantages described herein.

As shown in FIG. 1, platform 190 is configured to be removably coupled to base 124 of trap 122 and detector device 104. For example, platform 190 is configured to be concurrently coupled to trap 122 and detector device 104 such that operation of the portion of the capture element 128 from the set position toward a capture position is detectable by the detector device. Platform 190 may include one or more surfaces, walls, brackets, protrusions, through holes, or the like to enable coupling of trap 122 and device 104. For example, platform includes a first portion 152 associated with detector device 104 and a second portion 154 associated with trap 122. Although platform 190 is described as being removably couplable to each of detector device 104 and trap 122, in other implementations, platform 190 is removably couplable to one of detector device 104 or trap 122, but not to the other. For example, in a particular implementation, detector device 104 (e.g., base station 110) is integrated in platform 190 and trap 122 is removably couplable with platform 190. In such implementations, secondary station 140 may be removably coupled to platform 109 via base station 110. In an alternate implementation, trap 122 is integrated in platform 190 and detector device 104 is removably couplable with platform 190.

As shown, platform 190 is a single structure. Alternatively, platform 190 may include multiple structures. For example, first portion 152 (e.g., chamber) may include or correspond to a covering or a holder, such as a covering or a holder. To illustrate, platform 190 may be configured to be removably coupled to a holder that is configured to be coupled to detector device 104. Accordingly, that platform 190 can be configured to be coupled to detector device 104 via the holder.

Thus, FIG. 1 describes a pest-management apparatus (e.g., 100) that provides increased speed and ease of deployment and a reduction in time and manpower for identification of an operated pest-management apparatus. To illustrate, components and devices of the pest-management apparatus are configured to be removably coupled from each other and, when coupled, enable proper function and interaction between different components. Further, additional functionality may be added to the pest-management apparatus, in the form of secondary station 140, if such functionality is deemed necessary. In this manner, the present disclosure provides an adaptable pest-management system with "plug and play" components that are individually replaceable in a case of a failure. Additionally, the components may be exchanged for other components (e.g., secondary station 140) that are tailored to the environment of the pest-management device.

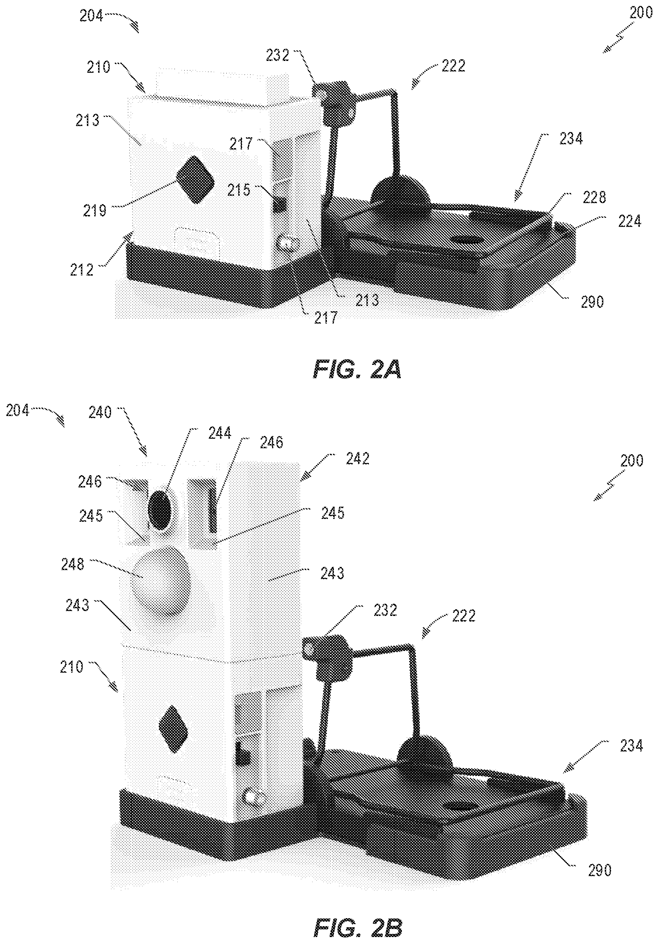

Referring now to FIGs. 2A and 2B, an example of an assembled pest-management apparatus 200 (e.g., a pest-management system) is depicted that includes a detector device 204 coupled to a trap 222 via a platform 290. For example, FIG. 2A shows a perspective view of a base station 210 of detector device 204 coupled to platform 290 (e.g., via a device holder) such that the base station may detect movement of trap 222 (e.g., via magnet 232) and FIG. 2B shows a perspective view with a secondary station 240 of detector device 204 coupled to base station 210. Detector device 204, trap 222, and platform 290 may include or correspond to detector device 104, trap 122, and platform 190, respectively.

Base station 210 includes a housing 212 having a plurality of surfaces 213 that may define an interior portion (e.g., cavity) in which one or more electrical components (e.g., processor 114, a memory 116, a transceiver 118, sensors 120, or the like) may be stored. As shown, one of surfaces 213 (e.g., side surface) includes a switch 215 or defines an opening that allows the switch 215 to be accessible via the opening. Switch 215 may include an activation switch, such as a toggle switch, push button, a slide switch, or a rotary switch, as illustrative, non-limiting examples. In some implementations, detector device 204 is activated (e.g., turned on) via switch 215. In other implementations, switch 215 may be programed to perform one or more other functions when activated. In the depicted implementation, one of surfaces 213 may include one or more ports 217 that may correspond to a charging port, such as a USB charging port for an internal and/or replaceable rechargeable battery, a sensor port, communication port (e.g., Ethernet port, coax port, or the like), or other electrical connection port. Additionally, or alternatively, some implementations of base station 210 include an indicator 219 configured to provide a visual indication to a user. For example, indicator 219 may include one or more light sources that are initiated (e.g., lit up) once detector device 204 is activated.

Trap 222 includes a base 224, a capture element 228 (e.g., a hammer, a bar, a jaw, etc.) that is biased toward a capture portion 234, and a magnet 232, which may include or correspond to base 124, capture element 128, capture portion 134, or magnet 232, respectively. Trap 222 is coupled to base station 110 such that magnet 232 activates a sensor (e.g., 120) of the base station when capture element 228 moves from a set position (toward capture portion 234) to a capture position (shown in FIG. 2A).

Referring now to the implementation of pest-management apparatus 200 shown in FIG. 2B, detector device 204 includes a secondary station 240 coupled to base station 110. As shown, secondary station 240 is coupled to base station 110 via a protrusion defined by surface 213 (e.g., top surface) of the base station. Secondary station 240 includes a housing 242 having a plurality of surfaces 243 that may define an interior portion (e.g., cavity) in which one or more electrical components (e.g., processor, a memory, a transceiver, sensors (motion sensor), circuit board, or other circuitry) may be stored. In some implementations, secondary station 140 includes a camera 244, light sources 246, and an indicator 248. Housing 242, camera 244, light sources 246, and an indicator 248 may include or correspond to housing 142, camera, 144, light source 146, or indicator 148, respectively.

In the depicted implementation, at least one of surfaces 243 defines a plurality of recessed portions 245. However, in other implementations, housing 242 (e.g., surface 243) may define a single recessed portion or more than two recessed portions. Recessed portion 245 may be a depression (e.g., recessed) part of surface 243. For example, recessed portion may include a portion of surface 243 that is displaced from a plane in which the rest of surface 243 lies. While recessed portion 245 is shown as being rectangular, in other implementations, the recessed portion may include any suitable shape such as, circular, ellipsoidal, triangular, pentagonal, or otherwise polygonal. In some implementations, recessed portion 245 may be tapered (e.g., include tapered sidewalls), while in other implementations, recessed portion may extend substantially perpendicular to surface 243.

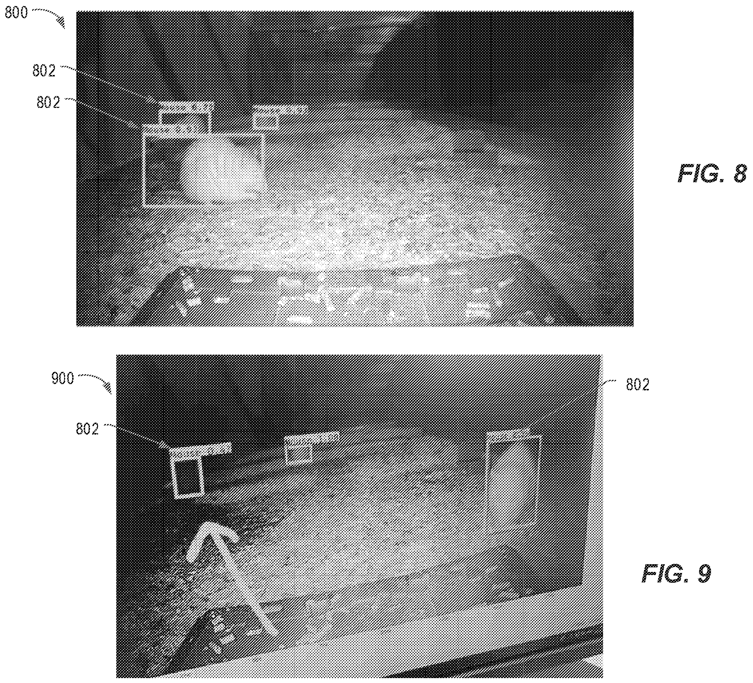

As shown, camera 244 is interposed between recessed portions 245 and a light source 246 is disposed within each recessed portion 245. In such implementations, light emitted from light sources 246 may be directed (e.g., reflected) by recessed portion to enable a stronger/brighter light. This may help illuminate a target area (e.g., area within line of sight of camera 244) to increase image capture distance and increase image quality within dark or enclosed areas. In other implementations, all light sources 246 need not be disposed within a recessed portion 245, but may be spaced from camera 244 to illuminate the camera's field of view. The increased illumination of the described implementations, allow for better accuracy for identification/detection of pests (as described further herein with reference to at least FIGs. 8-13).

During operation of either implementation (of FIG. 2A or 2B), detector device 204 may be activated (e.g., via switch 215). Capture element 228 is configured in the set position such that a magnetic field of magnet 232 causes a sensor (e.g., 120) to be in an active state. In response to a pest occupying capture portion 234 (e.g., applying a force to the capture portion) capture element 228 is released from the set position and travels towards the capture portion. As magnet 232 travels with capture element 228, a strength of a magnetic field (of the magnet) received by the sensor (e.g., 120) dissipates and the sensor transitions from the active state to a deactivated state in response to a received magnetic field strength being less than a threshold, indicating operation of trap 122. Operation of the trap 222 may trigger activation of camera 244. While camera 244 is shown facing away from trap 222 to illustrate the features of secondary station 140, camera 244 may face the trap to capture an image to determine if a pest was actually captured by operation of the trap. The image (image date) can be transmitted to an external device for review. Accordingly, the trap 222 can be monitored remotely. In a particular implementation, the trap 222 may be reset or rearmed remotely as well.

Referring to FIGS. 3A-3I, views of various mounting configurations for detector device 204 are illustrated. FIG. 3A illustrates detector device 204 having base station 210 and secondary station 240 as separate components that are coupled together via an electrical connection 241 (e.g., controller area network (CAN) bus connection, or other wired connection. FIGs. 3B-3E illustrate a front, right perspective view; a front, left perspective view; a front view; and a side view, respectively, of detector device 204 in a vertically stacked configuration. FIGs. 3F-3I illustrate a back perspective view, a front perspective view, a side view, and a top view, respectively, of detector device 204 in a horizontally stacked configuration. In some configurations, such as that depicted in FIGs. 3B-3E, base station 210 and secondary station 240 are coupled together such that the electrical connection (e.g., 241) between the devices is internal (e.g., within housing 212 and/or housing 242). While in other configurations, such as that depicted in FIGs. 3F-3I, base station 210 and secondary station 240 are coupled together such that electrical connection 241 (e.g., electrical wire) extends outside of the housings 212, 242. In some such implementations, electrical connection 241 may extend from an opening 249 defined by surfaces 213, 243 of housings 212, 242, respectively. In such internally wired configurations, the wires may be less prone to damage, such as from the pest chewing on or pulling on the wires. In such externally wired configurations, the positions of base station 210 and secondary station 240 are more flexible and can be oriented to observe/detect a specific target area. In other implementations, base station 210 and secondary station 240 may be connected via a wireless interface, such as any suitable wireless interface described herein.

Referring to FIGS. 4A-4F, pictures of various mounting configurations and mounts (e.g., pest-management device or a pest monitoring mount) for detector device 204 are illustrated. FIGs. 4A and 4B illustrated a front and back perspective view, respectively, of detector device 204 mounted on a stand 402. FIGs. 4C and 4D illustrate a collapsed and exploded view of detector device 204 mounted in a bait station 404 (e.g., 112). In the depicted implementation, a trap (e.g., snap-trap, adhesive trap, poison trap, etc.) may be disposed within bait station 404 such that the trap is within the field of view of camera 244 and/or one or more sensors (e.g., 210, 250) of detector device 204.

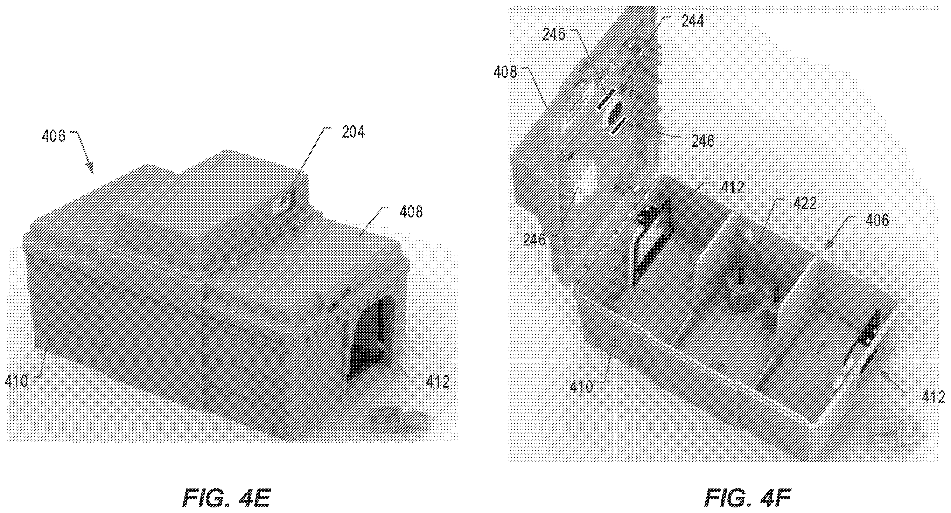

For example, FIGs. 4E and 4F show an example of detector device 204 coupled to another bait station 406 in a closed and open configuration, respectively. As shown, bait station 406 includes a lid 408 moveable coupled to a base 410 having one or more compartments (e.g., chambers). In some configurations, base 410 may define one or more openings 412 (e.g., entranceways) to allow pests to access a trap, or lure, 422 disposed within bait station 406. Detector device 204 is coupled to bait station 406 in such a way that the detector device may monitor trap 422, openings 412, or other portion of the bait station. To illustrate, lid 408 may define an aperture that allows camera 244 access to view trap 422 that is disposed within bait station 406. In some implementations (e.g., as depicted in FIG. 4F) light source 246 may be a separate component couple to a portion (e.g., lid 408) of bait station 406. Additionally, or alternatively, lid 408 may define a plurality of apertures to enable camera 244 and light sources 246 integrated in detector device 204 to access the interior of bait station 406. In other implementations, detector device 204 may be coupled to a bottom side of lid 408. In this way and others, camera 244 may capture images of a pest interacting with trap 422 as described in more detail with reference to FIGs. 5 and 6.

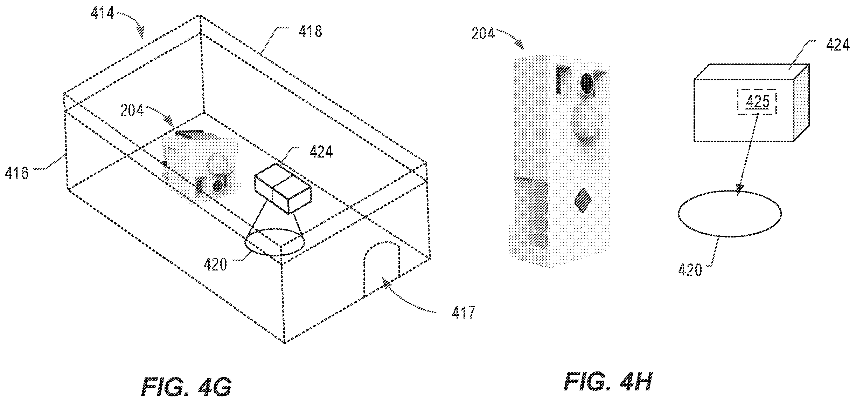

In another illustrative example, detector device 204 may operate with a bait container 424 (e.g., trap) as shown in FIGs. 4G and 4H. Referring to the example illustrated in FIG. 4G, detector device 204 and bait container 424 may be disposed within a bait station 414. Bait station 414 may include a base 416 defining one or more openings 417 and a lid 418 coupled to the base, such that the base and the lid cooperate to define a chamber. In some implementations, bait container 424 is coupled to lid 418 and configured to be activated (e.g., remotely opened) to drop bait 425 in a target area 420. In other implementations, bait container 424 may be coupled to base 416, disposed outside of a bait station (e.g., FIG. 4G), coupled to another trap (e.g., 422), or otherwise positioned to dispense bait in a target area (e.g., 420). In some implementations, target area 420 corresponds to an area within a line of sight of camera 244. In this way, and others, bait container 424 may dispense bait 425 in an area that is in a visible range of camera 244 to lure pests into a position such that the camera may capture images of the pests. Although not shown, bait container 424 may include one or more components to enable the bait container to dispense bait 425 remotely, such as, for example, an actuator (e.g., motor), processor, memory, transceiver, wireless interface, circuitry, power source, or the like. Bait container 242 may be activated (e.g., opened to dispense bait 425) remotely based on the identification of a pest. In some implementations, a user (e.g., via electronic device 552) may active bait container 242. Additionally, or alternatively, bait container 242 may be activated based on detection of a pest (e.g., via sensors 150, servers 552, 602, or other component described herein) as described in more detail with reference to FIGs. 5 and 6.

Referring to FIG. 5, a block diagram of an example of an illustrative pest-management system 500 is depicted having a pest-management station 501, a network 551, a server 552, and an electronic device 554 (e.g., a desktop computer, a laptop computer, or a mobile computing device (e.g., a cellular phone, smartphone, etc.), a tablet, a personal digital assistant (PDA), a smart watch, another type of wireless computing device, or any part thereof.). Pest-management station 501 includes a trap 522 and a detector device 504 having a base station 510. Detector device 504 is wirelessly coupled to the network 551. Network 551 is coupled to the server 552 and/or the device 554 (e.g., an electronic device, such as a computer, mobile device, smart phone, etc.) via a wired connection, a wireless connection, or both. Each of server 552 and electronic device 554 may include a memory storing one or more instructions, and a processor coupled to the memory and configured to execute the one or more instructions to perform corresponding operations as described herein. For example, electronic device 554 may include one or more instructions (e.g., software), such as a mobile application, to enable the electronic device to configure detector device 504.

As shown, detector device 504 includes base station 110 having one or more computing components, such as a processor 514 (e.g., controller), memory 516, communication circuitry 518, one or more indicator devices 519, a power supply 526, and/or other components. In other implementations, base station 510 may include more components or fewer components. As shown, detector device 504 may include one or more sensors 520 coupled to a housing (e.g., 112, 212). Sensors 520 may be physically coupled to an exterior of the housing, integrated in the housing, or disposed within the housing (e.g., within a cavity of the housing 106). Sensor 520 may include a magnetic field sensor as described above with respect to FIGs. 1-2B. Additionally, or alternatively, sensor 520 may include one or more sensors, such as a moisture sensor, a heat sensor, a vibration sensor, a power sensor, etc. In some implementations, sensors 520 may be coupled to circuitry via a connector 538 and an electrical wire 541. Detector device 504 may also include a switch 515, such as activation switch and/or a control switch. For example, switch 515 may include or correspond to switch 215. Switch 515 may be coupled to circuitry and configured to activate one or more components of detector device 504.

Memory 516 is configured to store instructions 528 and/or data 530. Instructions 528 may be executable by processor 514 that is coupled to memory 561 and to sensors 520. For example, processor 514 may be configured to execute the instructions to perform one or more operations, as described herein. Data 530 may include information about detector device 504, such as a device identifier (ID), location information of the detector device, or one or more thresholds, such as a timer threshold, a power threshold, or a sensor value threshold, as illustrative, non-limiting examples.

Communication circuitry 518 includes a transceiver and is configured to generate notifications or messages, such as representative message 556, for wireless communication. Although communication circuitry 518 is described as including a transceiver, in other implementations, the communication circuitry includes a transmitter but not a receiver. Additionally, or alternatively, communication circuitry 518 may include one or more interfaces to enable detector device 504 to be coupled (via a wired connection and/or a wireless connection) to another device. Power supply 526 includes a battery, such as a rechargeable, disposable, solar battery, or other power source.

In some implementations, sensors 520 (e.g., reed sensors) are configured to generate sensor data (e.g., 668) indicative of a status of a door or point of entry to a building or monitored area. For example, the detector device (e.g., 104, 204) may include a sensor configured to sense a state of a door or a change in a state of a door (or other entry point). To illustrate, a magnetic switch may be operatively (e.g., magnetically) coupled to a magnet or a magnetic portion of a door, such that movement of the door causes the sensor to indicate a change in door status. As another example, the detector device may include a port configured to couple to an external sensor configured to sense a state of a door or a change in a state of a door (or other entry point). The sensor data (e.g., 668) may be used to activate the camera 544, as described with reference to FIG. 6.

In some implementations, detector device 504 includes a secondary station 540 having one or more computing components, such as a processor 542, a camera 544, light sources 546, an indicator device 548, and one or more sensors 550. Camera 544, light sources 546, indicator device 548, and sensors 550 may include or correspond to camera 144, 244, light sources 146, 246, indicator 148, 248, or sensors 150, respectively.

Processor 514 may be in communication with processor 542 to cause processor 542 to transmit one or more commands to the components (e.g., 542-550) of secondary station 540. In other implementations, processor 542 may be excluded and processor 514 may be directly connected to the components of secondary station 540.

Processor 514 may be configured to execute instructions 528 to detect activation of trap 522 (e.g., the release of capture element 128 from the set position), activate an indicator device 519 responsive to detection of the release, or both. For example, sensor 520 may detect activation or deactivation of trap 522. Additionally, or alternatively, in response to activation of trap 522, processor 514 may initiate communication circuitry 518 to transmit message 556 indicating operation of trap 122. Communication circuitry 518 may transmit message 556 to server 552 or to electronic device 554. In some implementations, processor 514 is configured to identify when an output of a sensor 520 satisfies a threshold and, in response, to initiate a communication (e.g., a message). For example, when sensor 520 is a power supply sensor, processor 514 may identify when power supply 526 is in a low power condition, such as when a battery needs to be changed or charged. As another example, when sensor 520 is a moisture sensor, processor 514 may identify when one or more traps are underwater and are in need of physical inspection. As another example, when sensor 520 is a vibration sensor, processor 514 may identify activation of a particular trap based on a signal of a corresponding switch indicating operation of the particular trap and based on the output of the vibration sensor being greater than or equal to a threshold during a particular time period associated with the processor 514 receiving the signal from the switch.

Processor 514 may be configured to perform one or more operations related to secondary station 540. For example, in response to activation of sensor 550 (e.g., motion sensor), processor 514 may initiate activation of light source 546 (e.g., flash) and camera 544 to capture an image of trap 522. In response to activation of camera 544, processor 514 may initiate communication circuitry 518 to transmit a message (e.g., 556) including image data to server 552 or electronic device 554. As described further herein with respect to FIGs. 6 server 552 may determine the presence of a pest and processor may receive (e.g., via communication circuitry 518) an input corresponding to a captured pest. In some such implementations, processor may activate indicator 548 to alert a user that a pest is caught in trap 522. This enables a user to identify when trap 522 has been activated without the need to visually check the trap. While the above processes are described with respect to processor 514, it should be understood, one or more of the described processes can be performed, at least in part, by processor 542.

In some implementations, camera 544 is configured to capture an image responsive to receiving an image capture command, such as from an input button (e.g., switch 515) or from a remote device (e.g., 552 or 554). For example, server 552 and/or electronic device 554 may transmit a command to base station 510 or secondary station 540 (e.g., via network) to cause camera 544 or light source 546 to initiate an action, such as flash and capture an image. In such implementations, a user at a remote location, via electronic device 554, may cause camera 544 to take a picture and transmit (e.g., via communication circuitry 518) the picture, or associated image data, to the electronic device. In such implementations, the user can manually request a photo to visually check a status of pest management station 501 (e.g., trap 522). This enables a user to troubleshoot (e.g., double check) any potential failures at pest management station 501 such as, for example, if sensor 520 is not responding, the user can visually check to see if trap 522 has been actuated. If trap 522 actuated without sending a notification, sensor 520 may be replaced, or other maintenance ordered. Further, the user requested image data may help determine when the replenishment of bait is needed. As an illustrative, non-limiting example, if sensors 520 or 550 have not been activated for a period of time, a user (e.g., via electronic device 554) may remotely request a photo of trap 522 to visually determine if the trap has run out of bait. Thus, pest management station 501 enables a user to perform traditional maintenance operations remotely, without the need to physically travel to the pest management station. When dealing with hundreds of bait stations (e.g., 501) this can substantially eliminate maintenance times and easily identify which stations/traps need repair.

In an additional example, server 552 and/or electronic device 554 may transmit a command to pest management station 501 (e.g., via network 551) to cause activation of one or more components of the station (e.g., trap 522, bait container 424, indicator 519, or the like). To illustrate, in an implementation with a bait container (e.g., 424) server 552 and/or electronic device 554 may transmit a command to drop/dispense bait upon identification of a pest. In some such implementations, the pest may be identified via programming (e.g., at server 552 based on image data sent from camera 544) or via a user (e.g., at a display of electronic device based on an image). The server 552 or electronic device 554 (e.g., via an input from a user) may then transmit a command to a processor (e.g., 514, 542) of pest management station 501 to cause bait to be dispensed at a target area (e.g., 420), at a trap (e.g., 522), or any other suitable location.

Referring now to FIG. 6, a block diagram of an example of an illustrative pest-management system 600 is depicted that includes a server 602 and multiple pest-management stations (e.g., pest-management devices (PMDs) 604, 606, 607). Server 602 may include or correspond to server 552, and PMDs 604 and 604 may include or correspond to detector devices 104, 204, 504, or a combination thereof.

Server 602 includes a processor 610, a memory 612, and a communications interface 614 (e.g., wired interface, wireless interface, or both). Memory 612 is configured to store data, such as instructions 622, training data 624, neural network data 626, and AI generated pest identification data 628. Training data 624 (e.g., training sets) includes pest image database data and/or pest specification database data. Processor 610 generates a neural network (e.g., neural network data 626) based on processing the training data 624. Based on the neural network (e.g., neural network data 626) and the training data 624 (e.g., the processing thereof), AI generated pest identification data 628 can be derived which is based on and/or includes correlations identified by the neural network.

AI generated pest identification data 628 includes or corresponds to AI generated correlation data used to identify a pest or a property thereof. The AI generated pest identification data 628 may be in the form of tables, images, thresholds, formulas, or a combination thereof. In some implementations, AI generated pest identification data 628 may include eye curvature data 629, condition data 630, timing data 631, or combination thereof. To illustrate, eye curvature data 629 includes AI generated data on eye curvature of species and/or sex of pests such that image data can be analyzed to determine a species and/or sex of a pest or type of pest (e.g., species of rodent). Condition data 630 includes AI generated data on different weather (e.g., temperature and humidity) and lighting conditions such that corrections can be made for identifying pest in all conditions and using visible and/or infrared images.

In some implementations, pest management system 600 (e.g., at server 602) may further include AI generated timing data, such as timing data 631. Timing data 631 may be included as part of the AI generated pest identification data 628 or, in other implementations, may be separate from the AI generated pest identification data. Timing data 631 may be generated by server 602 or the PMDs (e.g., 604, 606, 607). Timing data 631 may include or correspond to computer generated correlations indicating when to capture images based on image data (e.g., 664), sensor data 668, or a combination thereof. Sensor data 668 may be generated based on one or more sensors (e.g., 120, 150, 520, 550, etc.) of a PMD (e.g., 604). In some implementations, timing data 631 is stored at server 602, and the server generates image capture commands based on the timing data and sends the commands to the PMDs.

First PMD 604 includes a secondary station 640 having controller 632, a memory 634, a wireless interface 636, one or more ports 638, a first light source 641, a second light source 642, and a camera 644. Memory 634 may include one or more instructions 646, image data 664, or other data 648 (e.g., from a switch or sensors). Components 632-644 may include or correspond to such corresponding components of secondary station 140, 240, or 540. The first and second light sources 641, 642 may include or correspond to the same or different light sources. For example, ultraviolet light, visible light and infrared light sources may be used. In a particular implementation, the first light source 641 and the second light source 642 include or correspond to a visible light source and an infrared light source. The one or more ports 638 may include or correspond to ports for one or more sensors of PMD 604 and/or ports for one or more sensors couplable to PMD 604.

During operation, first PMD 604 captures an image using camera 644, i.e., generates image data 664. The image may correspond to an area external to the first PMD 604 or an area of an interior of the first PMD 604. First PMD 604 may use the first light source 641, the second light source 642, or both as flash devices based on conditions, such as lighting conditions and direction. For example, non-visible light, such as infrared light, may be used to image an area external to the first PMD 604 to not scare away incoming pests and/or at night. Visible light may be used to image an internal area, such as when capturing images of an interior or cavity of first PMD 604, because such images may provide higher quality images and identification of a pest already captured or of an empty trap. The image data 664 is sent to the server 602 for processing. The server 602 analyzes the image data 664 using AI generated pest identification data 628 and generates an indication, modifies the image data, generates a notification message 666 including the indication, updates the training data 624 with the image data, updates the neural network based on the image data, or a combination thereof.

In a particular implementation, first PMD 604 generates the image data 664 responsive to a request, such as a request message 662 from server 602. Alternatively, the request message 662 is transmitted by another device, such as a client device or mobile device (e.g., smartphone). The request message 662 may be a pull request. Additionally, or alternatively, first PMD 604 generates the image data 664 based on sensor data 768 generated by or at first PMD 604 (e.g., via a motion sensor), and "pushes" image data 664 to server 602 independent of a request (e.g., 662). Sensor data 668 may include, for example, when a trap (e.g., 122) or bait station (e.g., 424) is activated, when a touch bar is triggered, when a sensor value exceeds a threshold level, expiration of a timer, etc. To illustrate, sensor data 668 may be captured by a particular sensor (e.g., reed switch) and indicate when a door opens and/or closes, when a capture element is sprung, or other operation of a trap. In another implementation, sensor data 668 may be captured by a sensor (e.g., motion sensor) and indicate when a pest enters a monitored area (e.g., inside a trap). In a particular implementation, the camera 644 is activated based on sensor data 668 from two or more sensors indicating a pest is in or near the first PMD 604.

In some implementations, camera 644 may be configured to operate in one or more modes. The modes may include an on-demand mode, a timer based mode, a trigger based mode, or a combination thereof. The on-demand mode corresponds to a mode where a request (e.g., 662) is received and camera 644 captures one or more images in response to the request, such as immediately or shortly after receiving the request or at some schedule time in the future indicated in the request. The timer based mode corresponds to a mode where camera 644 captures one or more images responsive to the expiration of a timer or responsive to a timer condition being satisfied, e.g., 9:00 am. The trigger based mode corresponds to a mode where camera 644 captures one or more images based on and responsive to sensor data 668. To illustrate, when the sensor data 668 of one or more sensors is compared to one or more corresponding thresholds and satisfies at least one of the thresholds, the camera 644 captures one or more images in response to the comparison/determination.

In some implementations, camera 644 may operate in more than one mode at a time. For example, camera 644 may be configured to capture images responsive to a timer and responsive to sensor based triggers. As another example, after activation of a trap (e.g., 122), camera 644 may operate in a timer based mode (e.g., a keep alive mode) and an on-demand mode. To illustrate, every period (e.g., every x hours) an image is captured and images may also be capture responsive to a request. In some implementation, server 602 may select (e.g., via transmission of request 662) a mode of the camera based on data (e.g., 664, 668) received from first PMD 604.

In each of the above described modes, the camera 644 may capture images according to corresponding mode settings. To illustrate, when in a particular mode, camera 644 captures images using camera settings that correspond to the particular mode the camera is in. Mode settings (i.e., camera settings for a particular mode) may include amount of images to capture, image capture delay, type of flash used, flash delay, focus, shutter speed, image location (an area external to first PMD 604, an area of an interior of the PMD, or both), etc., or a combination thereof.

As a first illustrative, non-limiting example, trigger based modes may have a mode setting (camera mode setting) to use a first type of flash, such as visible light, a second type of flash, UV light, or both. Additionally, in some implementations, the mode settings may have multiple different settings for a given mode, i.e., sub-mode settings. One such example of a mode that may have sub-mode settings is the trigger based mode. To illustrate, when camera 644 is activated based on a first sensor (e.g., a motion sensor indicates motion exterior to the PMD) the camera captures an image of an area exterior of the PMD using a second type of flash, UV flash. As another illustration, when camera 644 is activated based on a second sensor (e.g., a touch bar sensor indicates motion in an interior of the PMD) the camera captures an image of the interior of the PMD using a first type of flash, visible light flash. Thus, camera 644 can be operated based on the mode in which the camera was activated and based on additional information relevant to the activation.

As a second illustrative, non-limiting example, timer based modes may have a camera mode setting to use a first type of flash, such as visible light. To illustrate, as the trap may already be activated in such modes (e.g., keep alive mode), a visible light flash may provide better illumination and image quality. Also, scaring a pest away may not be applicable in such situations.

As a third illustrative, non-limiting example, trigger based modes may have a camera mode setting to use a first type of flash, such as visible light. To illustrate, as a user may desire to see a status of a trap, a visible light flash may provide better illumination and image quality. Although examples of flash settings for camera mode settings are provided above, camera modes may have additional or other (alternative) settings that are determined based on camera mode. In some implementations, the image data or modified image data is transmitted to the server by first PMD 604 responsive to capture (e.g., soon or immediately after capture if a connection is active). In other implementations, the image data or modified image data is transmitted to the server responsive to preset or preconfigured update times.

Although described with respect to first PMD 604, other PMDs (e.g., second PMD 606, third PMD 607, or more PMDs), may operate in a similar manner and may send data captured via the components (e.g., camera, sensors, or the like) to server 602 for analysis. First PMD 604, second PMD 606, and third PMD 607 may be the same or different types of PMDs. To illustrate, each PMD of system 600 may include different components and/or target different types of pests. Additionally, such devices may be located in different places, such as different places of the same location or in different locations entirely. In some implementations, first PMD 604 may include a trap, such as trap 122, bait, or a combination thereof. In some other implementations, first PMD 604 may include multiple traps and/or baits, and such traps and/or baits may include different types of traps and/or baits. When different types of traps and/or baits are used, the different types of traps and/or baits may target or be configured to catch or terminate (and optionally lure) different types of pests, such as insects, rodents, etc. As a non-limiting example, secondary station 640 of PMD 604 may be programmed to target a first type of pest and PMD 606 may include a secondary station (e.g., 140) that is programmed to target another type of pest, or, alternatively, PMD 606 may not include a secondary station.

In some implementations, secondary station 640 of first PMD 604 can be altered via one or more commands (e.g., 662) sent from server 602. For example, based on receiving image data 664 or sensor data 668, server 602 can identify a type of pest associated with secondary station 640 and adjust one or more components (e.g., operations of camera 644, light sources 641, 642, or controller 632) to best operate with that particular type of pest. Additionally, or alternatively, server 602 may adjust how image data 664 or sensor data is handled after receiving the data from secondary station 640. For example, based on server 602 identifying image data 664 of secondary station 640 as corresponding to a rodent, the server may alter one or more protocols of a component (e.g., processor 610, neural network 626, or the like) so that the sever may more quickly identify image data (e.g., 664) that corresponds to rodents. In some such implementations, server 602 may identify image data (664) received from second PMD 606 as corresponding to an insect and alter one or more protocols (e.g., software code) of the server to more quickly identify image data, received from second PMD 606, that corresponds to insects. The described operations allow server 602 to alter (e.g., optimize) each PMD (604, 606, 607) and/or data received from each PMD based on the environmental conditions associated with the respective PMD. In this way, the PMDs (604, 606, 607) need not be configured during set-up of the PMDs, but may be configured at a later time based on data received from the PMDs. Such operation enables global use of one or more components (e.g., base station or secondary station) of PMDs (604, 606, 607) without the need to customize the PMD during set-up. Thus, system 600 can decrease manufacturing costs of the PMDs, increase accuracy and efficiency of pest identification, and enable use of "plug and play" components that are individually replaceable without having to modify the settings of the PMD at the device itself.

The PMDs (604, 606, 607) may communicate with the server directly or indirectly. To illustrate, the first PMD 604 communicates directly with the server 602 via a network (e.g., cellular network), while the second PMD 606 communicates with the server 602 via a router 608 via the network or another network (e.g., an internet network or a wired network). As another example, the second PMD 606 may communicate with the server 602 via the first PMD 604. First PMD 604 (e.g., secondary station 640 or base station) is wirelessly coupled to server 602 (and optionally second PMD 606, such as a detector device thereof, and/or router 608) via a wired connection, a wireless connection, or both. Second PMD 606 is coupled to server 602 via router 608 (e.g., a wireless interface 652 thereof). Third PMD 607 may be coupled to server 602 in the same, or different, manner as PMDs 604 and 606.

As another illustration, image data which indicate positive results (e.g., a pest is present) may be used to identify which monitoring devices are candidates for increased monitoring and/or when to monitor or capture images. Additionally, or alternatively, image data which indicate negative results (e.g., no pests present) may be used to identify which monitoring devices are candidates for decreased monitoring and/or when to not monitor or capture images. Further, image data which indicate positive results (e.g., a pest is present) may be used to initiate an action of first PMD 604. For example, positive identification of a pest (e.g., at server 602 via AI generated Pest ID data 628, at an external device via identification and input of a user, or the like) may cause a trap (e.g., 122), bait station (e.g., 424), or other component of the system to be activated.

Accordingly, system 600 enables remote visibility of the traps and/or surrounding are of a PMD and enhanced image capabilities, such as AI detection, redundant activation of the camera, on-demand and/or scheduled imaging. Thus, a workload of a technician in reduced because of the decrease in false positives and effectiveness of individual PMDs and the system increases from reduced PMD downtime.

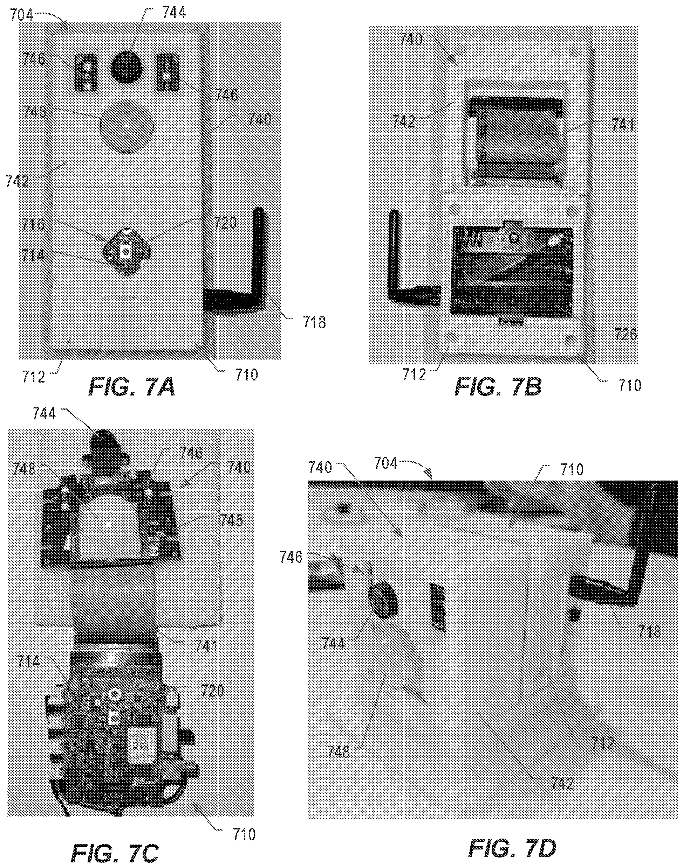

Referring now to FIGs. 7A-7D, various views of an example of an illustrative pest-management system 700 are depicted and include a detector device 704. Detector device 704 may include or correspond to detector device 104, 204, 504, 604 and includes a base station 710 and a secondary station 740. Base station 710 and secondary station 740 may include or correspond to base station 110, 210, 510 and secondary station 140, 240, 540, 640, respectively.

FIG. 7A shows a front view of detector device 704 in which a housing 742 of secondary station 740 is coupled to a top surface (e.g., 713) of a housing 712 of base station 710 (e.g., vertically stacked configuration) and FIG. 7B shows a back view of detector device 704 in the vertically stacked configuration. FIG. 7C shows base station 710 and secondary station 740 without their respective housings. FIG. 7D shows a perspective view of detector device 704 in a laterally stacked configuration.

As shown, base station 710 includes a printed circuit board (PCB) 714 (e.g., processor) disposed within housing 712. PCB 714 includes an electrical component 720 such as, for example, a sensor, a switch, an indicator, a light source, or combination thereof. In some implementations, housing 712 defines an opening 716 such that a user may access electrical component 720 when PCB 714 is disposed within housing 712. As shown in FIG. 7B, base station 710 includes a wireless transmitter 718 (e.g., antenna) configured to enable wireless communication between base station 710 and another device and a power source 726 (e.g., replaceable batteries) configured to provide power to PCB 714.

Secondary station 740 includes a PCB 745 disposed within a housing 742. In some implementations, secondary station 740 includes a camera 744, light source 746, or indicator 748 coupled to, or integrated with, PCB 745. As shown, housing 742 defines a plurality of openings 749 associated with each of camera 744, light source 746, and indicator 748. As shown in FIG. 7B, PCB 745 is connected to PCB 714 via an electrical connector 741. In some implementations, housing 742 may define a depression 747 (e.g., chamber) in which at least a portion of electrical connector 741 may be disposed. In this way, and others, housing 712 and housing 742 may be coupled together so that the housing rest flush against one another (e.g., as shown in FIG. 7D).

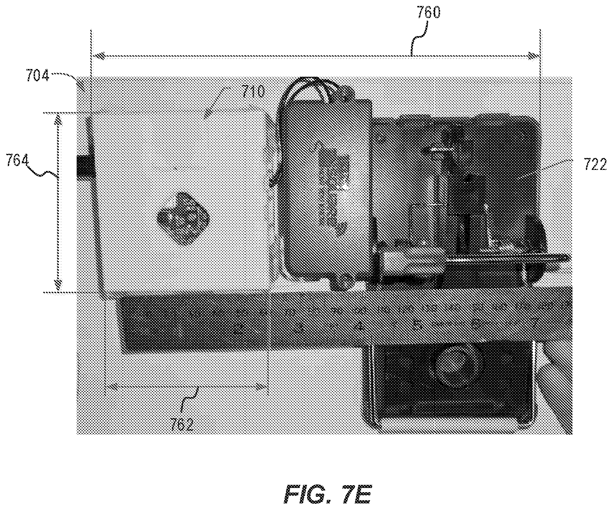

Accordingly, detector device 704 may be disposed within compact spaces in which pests are common and can be configured (e.g., stacked) in multiple orientations to accommodate the size limitations of such compact spaces. For example, FIG. 7 shows an illustrative example of pest-management system 700 in which detector device 704 is coupled to a trap 722. As shown, system 700 may have a length 760 that is less than 200 millimeters (mm) (e.g., approximately 180 mm). In some implementations, length 760 of system 700 (e.g., a length of detector device 704, trap 722 when coupled together) is less than or equal to any one of, or between any two of: 300, 380, 360, 340, 320, 300, 280, 260, 240, 220, 200, 180, 175, 170, 160, 150, 140, 130, 120, 110, or 100 mm. In some such implementations, detector device 704 includes a length 762 that is less than 75 mm and a width 764 that is less than 75 mm. Length 762 may be measured in a direction perpendicular to width 764. In some implementations, length 762 and/or width 764 is less than or equal to any one of, or between any two of: 125, 120, 110, 100, 90, 80, 70, 65, 60, 55, 50, 45, 40, or 35 mm. Thus, pest-management system 700 and detector device 704 may be sized and/or positioned to fit within compact spaces (e.g., between walls, under large objects, in crawlspaces, or the like). Additionally, as detector device 704 may be remotely monitored, any maintenance of detector device(s) placed in hard to reach areas may be decreased.

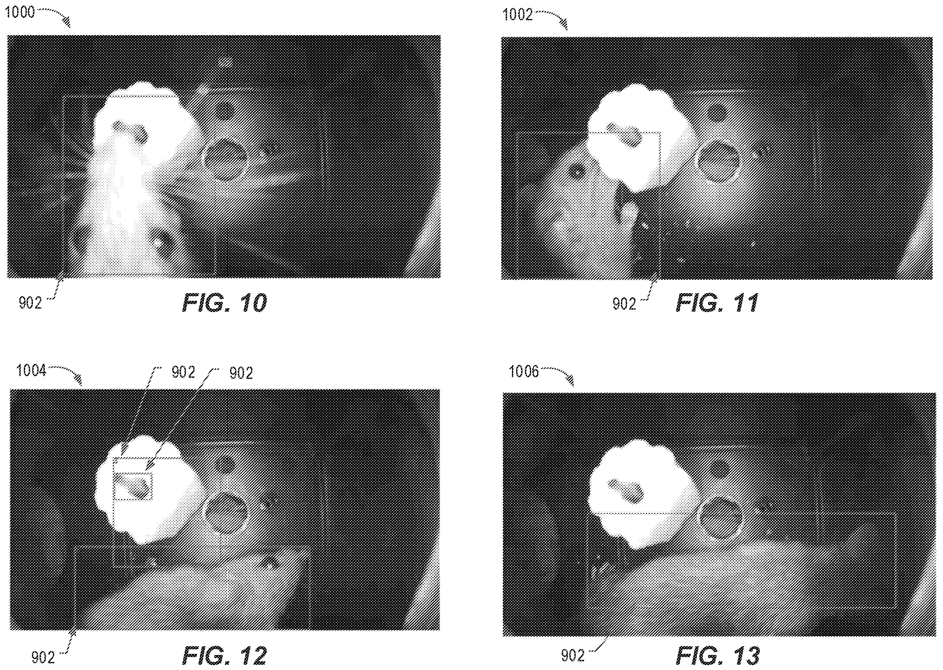

FIGs. 8-13 depict illustrative images of a display corresponding to display data generated by a detector device (e.g., 104, 204, 504, 604, 704) or a server (e.g., 552, 652), as described above, and based on image data captured by a camera of the detector device. For example, FIGs. 8 and 9 depict images captured by a detector device of a first target area corresponding to an exterior of a trap (e.g., 122, 222, 404, 406, 522, 722) and FIGs. 10-13 depict images captured by the detector device of second target area corresponding to an interior of a trap.

Referring to FIG. 8, an image 800 captured by the camera of the detector device of a first target area has been processed and modified (e.g., via a processor of a server) to include pest identification data 802. To illustrate, pest identification data 802 includes data which identifies the individual pests, such as a pest ID number, pest size (e.g., length, height, etc.), pest weight, pest type, pest sub-type (e.g., rodent species type), pest gender, etc. In the example of FIG. 8, the image has been modified with rectangles to highlight areas where individual pests have been detected and the image has been modified to include text which indicates a size and type of the pest. Additionally, or alternatively, pest identification data can include a confidence score that corresponds to a degree of confidence (e.g., between 0 and 1) of the identification of the type of the pest. The image 800 and any generated pest identification data 802 may be stored at a server (e.g., 552, 652) and/or transmitted to one or more external devices (e.g., 554). Accordingly, a user may remotely access image 800 and pest identification data 802 to identify specific types of pests inhabiting the area (e.g., first target area) near the detector device.

Referring to FIG. 9, a second image 900 captured by the camera (e.g., 144, 244, 544, 644, 744) of the detector device (e.g., 104, 204, 504, 604, 704) has been processed and modified to include second pest identification data 802. Similar to the image in FIG. 8, the image in FIG. 9 has been modified with rectangles to highlight areas where individual pests have been detected and the image has been modified to include text which indicates a size and type of the pest. The arrow indicates that a pest was identified even though the image does not shown or clearly show a pest in the far left rectangle. Such a pest was identified via a second image (IR image) and based on second image data (IR image data). As shown, a low level of visible light may decrease the accuracy of pest identification data (e.g., as shown by a confidence score of 0.47 for the low lighted identified pest and a confidence score of 0.99 and 1.00 for the identified pests in more visibly lighted areas). Thus, the light sources (e.g., 146, 246, 546, 641, 642, 746) of detector device, as described herein, can enable better detection of pests by the pest management system.

Referring to FIGs. 10-13, a plurality of images 1000-1006 captured by a camera of the detector device of a second target area (e.g., of an interior of bait station) are depicted. Similar to that described in FIGs. 8 and 9, the images may be processed and modified to include pest identification data 902. For example, the images have been modified with rectangles to highlight areas where individual pests may be detected. As an illustrative example, FIG. 10 depicts an image 1000 of the second target area at a first time, FIG. 11 depicts an image 1002 of the second target area at a second time, FIG. 12 depicts an image 1004 of the second target area at a third time, and FIG. 13 depicts an image 1006 of the second target area at a fourth time. First, second, third, and fourth times may be sequential and spaced apart by the same or different time intervals. In one example, first time may correspond to a time when a sensor (e.g., motion sensor) is activated and second, third, and fourth times may be spaced from first time by a time interval (e.g., 1, 2, 5, 10, 15, 20, 25, 30 seconds or more). In some such implementations, the camera may take an image as long as the sensor is active (e.g., continued motion). In another example, first, second, third, and fourth times may correspond to times when the sensor (e.g., motion sensor) is activated. Each image 1000-1006 may then be transmitted from the detector device to a server, where the images may be processed and modified to included pest identification data (e.g., 802, 902). In some such implementations, server may process each image separately, or, in other implementations, server may process one or more of images 1000-1006 together (e.g., compare image data, or other operations) based on a proximity between the first through fourth times.

In some implementations, such as that depicted in image 1004, the system may identify one or more areas (e.g., produce a rectangle 902 encompassing the object) of the image that may correspond to a pest. In such implementations, the system (e.g., processor of server) may then perform a pest identification process on the data defined within the identified area. The system may then perform one or more operations based on the pest identification process. For example, based on the area having a confidence score below a threshold (e.g., less than or equal to 0.3), system may ignore the area (e.g., delete the rectangle). Additionally, or alternatively, based on the area having a confidence score above a threshold, the system may modify the image to include pest identification data (e.g., text which indicates a size and type of the pest, confidence score, or the like). Although FIGs. 8-13 depict images, the results of the analysis of the image data can include images, text, or combination thereof. Such results may be sent via one or more methods, text, email, file transfer, etc., as described with reference to FIGs. 5 and 6.

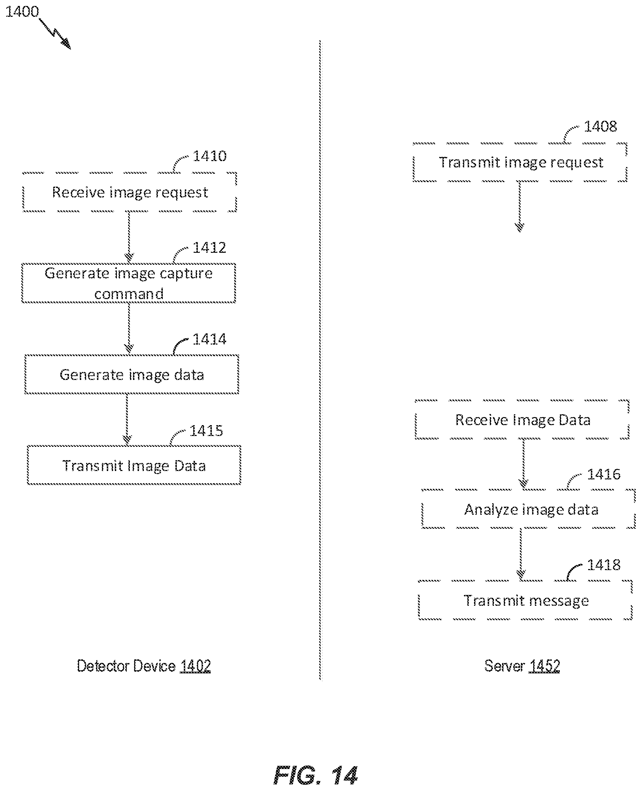

Referring to FIG. 14, an example 1400 of a method of operation of a detector device 1402 is shown. For example, detector device 1402 may include or correspond to detector device 104, 204, 504, 604, 704. The method 1400 may be executed by a server 1452 that may include or correspond to server 552. In other implementations, server 1452 may be replaced, or operate in conjunction with, a client device (e.g., electronic device 554).

The method 1400 may include receiving, by detector device 1402, an image request, at 1410, and includes generating an image capture command, at 1412. For example, a processor of detector device 11402 may generate a command to activate a camera responsive to receiving an image request. In some implementations, the image request is generated locally and/or received from a component of detector device 1402. To illustrate, a button may be pressed on the detector device or sensor data may be compared to thresholds to generate the image request and/or image capture command. In other implementations, the image request is received from another device (such as server 1452 as shown in step 1408), client device, or a combination thereof. The method 1400 further includes generating image data, at 1414, and transmitting the image data, at 1415. For example, the camera captures an image and generates image data and then transmits the image data to server 1452. Additionally, or alternatively, transmitting the image data at step 1415 may include transmitting the data to a client device.

In some implementations, method 1400 includes analyzing, by server 1452, the image data, at 1416. In some implementations, server 1452 includes AI software and processes the image data (e.g., 664) to generate modified image data. The method 1400 may also include transmitting a message, from server 1452, the message generated based on the image data, at 1418. The message may include or correspond to one or more of the messages described with reference to FIGs. 5 and 6. For example, the message may be an update message, a notification message, include raw image data, processed image data, or a combination thereof. The message may be sent to one or more devices, such as a device who sent the image request, a device who relayed or forwarded the image request.

Thus, the method 1400 describes operation of detector device 1402 and server 1452. To illustrate, the detector device of a pest-management apparatus may be configured to provide an indication of a status of the detector device and/or an indication of operation of a trap. Additionally, the method 1400 may enable increased speed and ease of deployment of a pest-management apparatus and a reduction in time and manpower to identify pest-management apparatuses that have operated.

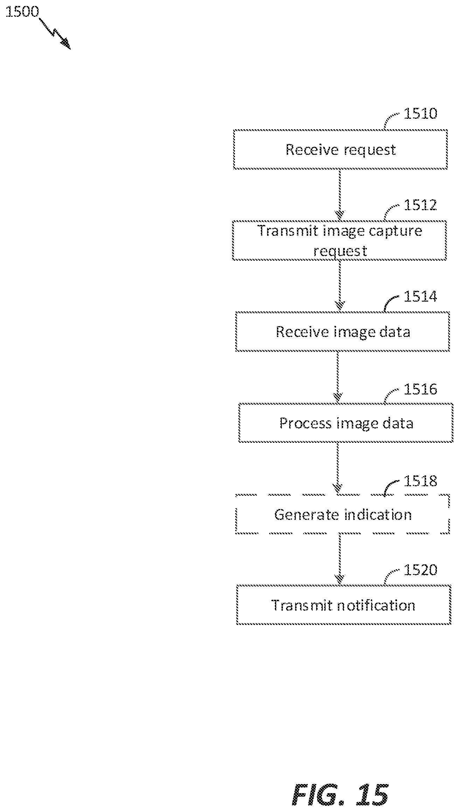

Referring to FIG. 15, an example 1500 of a method of operation of a server of a pest-management system is shown. For example, the server may include or correspond to server 552 and/or server 602. The method 1500 may be executed by server 552, device 554, and/or a processor/controller thereof.

The method 1500 may include receiving a request message, at 1510, and includes transmitting an image capture request message, at 1512. For example, the server 602, using processor 610, initiates sending of a request message (e.g., 662) to a PMD (e.g., first PMD 604) via communication interface. The method 1500 further includes receiving image data, at 1514, and processes the image data, at 1516. For example, the server (e.g., 602) received image data (e.g., 664) and/or modified image data from the PMD and processes the image data, the modified image data, or both. To illustrate, the server processes the image data using AI generated pest ID data (e.g., 628). As another illustration, the server updates the AI generated pest ID data based on the raw data.

The method 1500 may include generating an indication, at 1518. For example, the server processes the modified image data to generate an notification or indication of a pest, indication of no pest, indication of a service for the PMD (e.g., reset the trap), or a combination thereof. The method 1500 includes transmitting a notification, at 1520. For example, the server sends a notification message to a client device (e.g., 554), and/or a device from which it received the request at 1510. The notification may include the modified image data, the indication, or both.

Thus, the method 1500 describes operation of the detector device. To illustrate, the detector device of a pest-management apparatus may be configured to provide an indication of a status of the detector device and/or an indication of operation of a trap. Additionally, the method 1500 may enable increased speed and ease of deployment of a pest-management apparatus and a reduction in time and manpower to identify pest-management apparatuses that have operated.

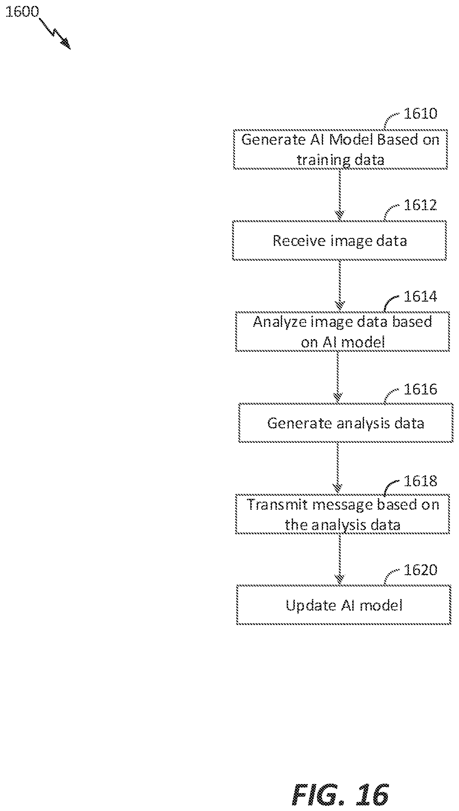

Referring to FIG. 16, an example 1600 of a method of operation for AI based pest identification is shown. The method 1600 may be executed by a server, electrical device, detector device or other component described herein. The method 1600 may include generating AI model data based on training data, at 1610, and receiving image data, at 1612, as described with reference to FIG. 6. The method 1600 may further include analyzing the image data, at 1614. The method 1600 may include generating analysis data, at 1616. For example, an indication or modified image data may be generated based on image data (e.g., 664). The method 1600 may also include transmitting a message based on the analysis data. Optionally, the method 1600 includes updating the AI model, at 1622, in some implementations. For example, the AI data (e.g., 624-628) may be updated based on updated or additional training sets and/or image data from devices of the pest-management system, as described with reference to FIG. 6.

Thus, the method 1600 describes operation of the detector device. To illustrate, the detector device of a pest-management apparatus may be configured to provide an indication of a status of the detector device and/or an indication of operation of a trap. Additionally, the method 1600 may enable increased speed and ease of deployment of a pest-management apparatus and a reduction in time and manpower to identify pest-management apparatuses that have operated.

## Claims

1. A monitoring device for a pest-management device (604, 606, 607), the monitoring device comprising:
a base station (110, 210, 510, 710) including:
a one or more sensors (120) configured to couple to a pest station (510), the sensors (120) including at least one of a reed switch, a touch sensor, or a motion sensor;
a transceiver (118) configured to wirelessly transmit data; a memory (116, 516, 561, 612, 634); and
a processor (114, 514, 542, 610) coupled to the memory; and
a secondary station (140, 240, 540, 640, 740) removably coupled to the base station (110, 210, 510, 710),
**characterised by**:
the secondary station (140, 240, 540, 640, 740) including a camera (144, 244, 544, 644, 744) configured to capture image data; wherein the processor is configured to activate the camera (144, 244, 544, 644, 744) based on sensor data from the one or more sensors (120);
and wherein the camera is positioned such that it is configured to capture images of an environment exterior to the pest-management station, to capture images of an interior portion of the pest-management station, or both.

2. The monitoring device of claim 1, wherein the secondary station (140, 240, 540, 640, 740) further comprises:
a housing (142, 242, 742) defining one or more recessed portions (245); and
one or more first light sources (246) disposed within at least one of the one or more recessed portions (245).

3. The monitoring device of claim 2, further comprising one or more second light sources (642), the second light sources (642) different from the first light source (246), wherein the first light source (246) comprises a visible light LED, and wherein the second light source (642) comprises an infrared LED.

4. The monitoring device of claim 1, further comprising artificial intelligence (AI) based pest identification software, wherein the processor is configured to identify rodents based on the AI based pest identification software.

5. The monitoring device of claim 1, wherein the AI based pest identification software is configured to identify rodent species, rodent gender, a particular rodent, or a combination thereof, based on rodent eye curvature image data.

6. The monitoring device of claim 1, wherein the base station (110, 210, 510, 710) and the secondary station (140, 240, 540, 640, 740) each include a housing and wherein the housing of the base station (112, 212, 712) is configured to couple to the housing of the secondary station (142, 242, 742) in a plurality of different configurations.

7. The monitoring device of claim 1, wherein the processor (114, 514, 542, 610) is configured to:
compare sensor data from one or more sensors (120) of the plurality of sensors to one or more corresponding thresholds;
determine, based on one or more comparisons of the sensor data to the one or more corresponding thresholds, whether to initiate activation of the camera (144, 244, 544, 644, 744); and
responsive to a determination to activate the camera (144, 244, 544, 644, 744), cause the camera (144, 244, 544, 644, 744) to capture an image using a visible light flash, an infrared light flash, or both.

8. The monitoring device of claim 1, wherein the processor (114, 514, 542, 610) is configured to:
responsive to a determination to that a timer has expired or a timer condition is satisfied, cause the camera (144, 244, 544, 644, 744) to capture an image using a visible light flash.

9. The monitoring device of claim 1, wherein the pest-management device comprises a pest-management station (501), and wherein the monitoring device is configured to be coupled to the pest-management station (501).

10. The monitoring device of claim 1, wherein the pest-management device comprises a pest monitoring mount, and wherein the monitoring device is configured to be coupled to the pest monitoring mount.

11. A pest-management system comprising:
a pest-management station (501), the pest-management station comprising:
a base portion; and
a lid portion; and
the monitoring device of any of claims 1-6 configured to couple to the pest-management station (501).

12. The pest-management system of claim 7, further comprising a server (602, 552, 652, 1452) configured to communicate with the monitoring device.

13. The pest-management system of claim 7:
further comprising a holder that is configured to receive at least a portion of the base station (110, 210, 510, 710), secondary station (140, 240, 540, 640, 740), or both, and
wherein the holder is configured to be coupled to the pest-management station (510).

14. A server comprising:
a communication interface;
a processor; and
a memory coupled to the processor, the processor configured to execute instructions stored in the memory to cause the processor to:
initiate transmitting of an image request message to one or more monitoring devices as claimed in any of claims 1 to 10;
receiving image data from a particular monitoring device of the one or more monitoring devices;
analyzing the image data based on pest identification data, the pest identification data generated based on artificial intelligence; and
outputting an indication based on analyzing the image data.

15. The server of claim 14, wherein outputting the indication includes initiate transmitting of a notification message to a client device associated with the particular monitoring device based on determining that the image data indicates a pest is present in the particular monitoring device.

## Patentansprüche

1. Überwachungsvorrichtung für eine Schädlingsmanagementvorrichtung (604, 606, 607), wobei die Überwachungsvorrichtung aufweist:
eine Basisstation (110, 210, 510, 710) mit:
einem oder mehreren Sensoren (120), die zur Kopplung mit einer Schädlingsstation (510) ausgelegt sind, wobei die Sensoren (120) mindestens einen von einem Reedschalter, einem Berührungssensor oder einem Bewegungssensor aufweisen;
einen Sendeempfänger (118), der dazu ausgelegt ist, Daten drahtlos zu übertragen;
einen Speicher (116, 516, 561, 612, 634); und
einen Prozessor (114, 514, 542, 610), der mit dem Speicher gekoppelt ist; und eine Sekundärstation (140, 240, 540, 640, 740), die lösbar mit der Basisstation (110, 210, 510, 710) gekoppelt ist,
**dadurch gekennzeichnet, dass**:
die Sekundärstation (140, 240, 540, 640, 740) eine Kamera (144, 244, 544, 644, 744) aufweist, die zum Aufnehmen von Bilddaten ausgelegt ist; wobei der Prozessor dazu ausgelegt ist, die Kamera (144, 244, 544, 644, 744) auf Grundlage von Sensordaten von dem einen oder den mehreren Sensoren (120) zu aktivieren;
und wobei die Kamera derart positioniert ist, dass sie dazu ausgelegt ist, Bilder einer Umgebung außerhalb der Schädlingsmanagementstation, Bilder eines Innenbereichs der Schädlingsmanagementstation oder beides aufzunehmen.

2. Überwachungsvorrichtung nach Anspruch 1, wobei die Sekundärstation (140, 240, 540, 640, 740) ferner aufweist:
ein Gehäuse (142, 242, 742), das einen oder mehrere vertiefte Bereiche (245) definiert; und
eine oder mehrere erste Lichtquellen (246), die in mindestens einem des einen oder der mehreren vertieften Bereiche (245) angeordnet sind.

3. Überwachungsvorrichtung nach Anspruch 2, die ferner eine oder mehrere zweite Lichtquellen (642) aufweist, wobei sich die zweiten Lichtquellen (642) von der ersten Lichtquelle (246) unterscheiden, wobei die erste Lichtquelle (246) eine LED für sichtbares Licht aufweist und wobei die zweite Lichtquelle (642) eine Infrarot-LED aufweist.

4. Überwachungsvorrichtung nach Anspruch 1, die ferner eine auf künstlicher Intelligenz (KI) basierende Schädlingsidentifizierungssoftware aufweist, wobei der Prozessor dazu ausgelegt ist, Nagetiere auf Grundlage der auf KI basierenden Schädlingsidentifizierungssoftware zu identifizieren.

5. Überwachungsvorrichtung nach Anspruch 1, wobei die auf KI basierende Schädlingsidentifizierungssoftware dazu ausgelegt ist, Nagetierart, Nagetiergeschlecht, ein spezielles Nagetier oder eine Kombination davon auf Grundlage von Nagetieraugenkrümmungsbilddaten zu identifizieren.

6. Überwachungsvorrichtung nach Anspruch 1, wobei die Basisstation (110, 210, 510, 710) und die Sekundärstation (140, 240, 540, 640, 740) jeweils ein Gehäuse aufweisen und wobei das Gehäuse der Basisstation (112, 212, 712) dazu ausgelegt ist, mit dem Gehäuse der Sekundärstation (142, 242, 742) in einer Mehrzahl verschiedener Konfigurationen gekoppelt zu werden.

7. Überwachungsvorrichtung nach Anspruch 1, wobei der Prozessor (114, 514, 542, 610) ausgelegt ist zum:
Vergleichen von Sensordaten von einem oder mehreren Sensoren (120) der Mehrzahl von Sensoren mit einem oder mehreren entsprechenden Schwellenwerten;
Bestimmen, auf Grundlage eines oder mehrerer Vergleiche der Sensordaten mit dem einen oder den mehreren entsprechenden Schwellenwerten, ob die Aktivierung der Kamera (144, 244, 544, 644, 744) initiiert werden soll; und
als Reaktion auf eine Bestimmung, die Kamera (144, 244, 544, 644, 744) zu aktivieren, Bewirken, dass die Kamera (144, 244, 544, 644, 744) ein Bild unter Verwendung von einem sichtbaren Lichtblitz, einem Infrarotlichtblitz oder von beidem aufnimmt.

8. Überwachungsvorrichtung nach Anspruch 1, wobei der Prozessor (114, 514, 542, 610) ausgelegt ist zum:
als Reaktion auf eine Bestimmung, dass ein Zeitgeber abgelaufen ist oder eine Zeitgeberbedingung erfüllt ist, Bewirken, dass die Kamera (144, 244, 544, 644, 744) ein Bild unter Verwendung eines sichtbaren Lichtblitzes aufnimmt.

9. Überwachungsvorrichtung nach Anspruch 1, wobei die Schädlingsmanagementvorrichtung eine Schädlingsmanagementstation (501) aufweist und wobei die Überwachungsvorrichtung zur Kopplung mit der Schädlingsmanagementstation (501) ausgelegt ist.

10. Überwachungsvorrichtung nach Anspruch 1, wobei die Schädlingsmanagementvorrichtung eine Schädlingsüberwachungshalterung aufweist und wobei die Überwachungsvorrichtung dazu ausgelegt ist, mit der Schädlingsüberwachungshalterung gekoppelt zu werden.

11. Schädlingsmanagementsystem, aufweisend:
eine Schädlingsmanagementstation (501), wobei die Schädlingsmanagementstation aufweist:
einen Basisbereich; und
einen Deckelbereich; und
eine Überwachungsvorrichtung nach einem der Ansprüche 1-6, die zur Kopplung mit der Schädlingsmanagementstation (501) ausgelegt ist.

12. Schädlingsmanagementsystem nach Anspruch 7, das ferner einen Server (602, 552, 652, 1452) aufweist, der dazu ausgelegt ist, mit der Überwachungsvorrichtung zu kommunizieren.

13. Schädlingsmanagementsystem nach Anspruch 7:
das ferner einen Halter aufweist, der dazu ausgelegt ist, mindestens einen Bereich der Basisstation (110, 210, 510, 710), der Sekundärstation (140, 240, 540, 640, 740) oder beider aufzunehmen, und
wobei der Halter zur Kopplung mit der Schädlingsmanagementstation (510) ausgelegt ist.

14. Server, aufweisend:
eine Kommunikationsschnittstelle;
einen Prozessor; und
einen mit dem Prozessor gekoppelten Speicher, wobei der Prozessor dazu ausgelegt ist, in dem Speicher gespeicherte Anweisungen auszuführen, um zu bewirken, dass der Prozessor Folgendes ausführt:
Initiieren der Übertragung einer Bildanforderungsnachricht an eine oder mehrere Überwachungsvorrichtungen nach einem der Ansprüche 1-10;
Empfangen von Bilddaten von einer speziellen Überwachungsvorrichtung der einen oder mehreren Überwachungsvorrichtungen;
Analysieren der Bilddaten auf Grundlage von Schädlingsidentifikationsdaten, wobei die Schädlingsidentifikationsdaten auf Grundlage von künstlicher Intelligenz erzeugt werden; und
Ausgeben einer Angabe auf Grundlage der Analyse der Bilddaten.

15. Server nach Anspruch 14, wobei das Ausgeben der Angabe das Initiieren der Übertragung einer Benachrichtigungsnachricht an eine der speziellen Überwachungsvorrichtung zugeordnete Client-Vorrichtung basierend auf der Bestimmung, dass die Bilddaten angeben, dass sich ein Schädling in der speziellen Überwachungsvorrichtung befindet, aufweist.

## Revendications

1. Un dispositif de surveillance pour un dispositif de gestion des organismes nuisibles (604, 606, 607), le dispositif de surveillance comprenant :
une station de base (110, 210, 510, 710) comprenant :
un ou plusieurs capteurs (120) configurés pour être couplés à une station de gestion des organismes nuisibles (510), les capteurs (120) comprenant au moins l'un parmi un interrupteur à lames souples, un capteur tactile ou un capteur de mouvement ;
un émetteur-récepteur (118) configuré pour transmettre des données sans fil ; une mémoire (116, 516, 561, 612, 634) ; et
un processeur (114, 514, 542, 610) couplé à la mémoire ; et une station secondaire (140, 240, 540, 640, 740) couplée de manière amovible à la station de base (110, 210, 510, 710),
**caractérisé par** :
la station secondaire (140, 240, 540, 640, 740) comprenant une caméra (144, 244, 544, 644, 744) configurée pour capturer des données d'image ; dans lequel le processeur est configuré pour activer la caméra (144, 244, 544, 644, 744) sur la base de données de capteur provenant des un ou plusieurs capteurs (120) ; et dans lequel la caméra est positionnée de telle sorte qu'elle est configurée pour capturer des images d'un environnement extérieur à la station de gestion des organismes nuisibles, pour capturer des images d'une partie intérieure de la station de gestion des organismes nuisibles, ou les deux.

2. Le dispositif de surveillance selon la revendication 1, dans lequel la station secondaire (140, 240, 540, 640, 740) comprend en outre :
un boîtier (142, 242, 742) définissant une ou plusieurs parties évidées (245) ; et
une ou plusieurs premières sources lumineuses (246) disposées à l'intérieur d'au moins l'une des parties en retrait (245).

3. Le dispositif de surveillance selon la revendication 2, comprenant en outre une ou plusieurs secondes sources lumineuses (642), les secondes sources lumineuses (642) étant différentes de la première source lumineuse (246), dans lequel la première source lumineuse (246) comprend une diode électroluminescente (LED) à lumière visible, et dans lequel la seconde source lumineuse (642) comprend une diode électroluminescente (LED) infrarouge.

4. Le dispositif de surveillance selon la revendication 1, comprenant en outre un logiciel d'identification d'organismes nuisibles basé sur l'intelligence artificielle (AI), dans lequel le processeur est configuré pour identifier des rongeurs sur la base du logiciel d'identification d'organismes nuisibles basé sur l'AI.

5. Le dispositif de surveillance selon la revendication 1, dans lequel le logiciel d'identification d'organismes nuisibles basé sur l'Al est configuré pour identifier des espèces de rongeurs, le sexe de rongeurs, un rongeur particulier, ou une combinaison de ceux-ci, sur la base de données d'image de courbure des yeux de rongeurs.

6. Le dispositif de surveillance selon la revendication 1, dans lequel la station de base (110, 210, 510, 710) et la station secondaire (140, 240, 540, 640, 740) comprennent chacune un boîtier et dans lequel le boîtier de la station de base (112, 212, 712) est configuré pour être couplé au boîtier de la station secondaire (142, 242, 742) dans une pluralité de configurations différentes.

7. Le dispositif de surveillance selon la revendication 1, dans lequel le processeur (114, 514, 542, 610) est configuré pour :
comparer des données de capteur provenant d'un ou plusieurs capteurs (120) de la pluralité de capteurs à un ou plusieurs seuils correspondants ;
déterminer, sur la base d'une ou plusieurs comparaisons des données de capteur aux un ou plusieurs seuils correspondants, s'il faut lancer l'activation de la caméra (144, 244, 544, 644, 744) ; et
en réponse à une détermination d'activer la caméra (144, 244, 544, 644, 744), amener la caméra (144, 244, 544, 644, 744) à capturer une image en utilisant un flash de lumière visible, un flash de lumière infrarouge, ou les deux.

8. Le dispositif de surveillance selon la revendication 1, dans lequel le processeur (114, 514, 542, 610) est configuré pour :
en réponse à une détermination selon laquelle qu'une minuterie a expiré ou qu'une condition de minuterie est satisfaite, amener la caméra (144, 244, 544, 644, 744) à capturer une image en utilisant un flash de lumière visible.

9. Le dispositif de surveillance selon la revendication 1, dans lequel le dispositif de gestion des organismes nuisibles comprend une station de gestion des organismes nuisibles (501), et dans lequel le dispositif de surveillance est configuré pour être couplé à la station de gestion des organismes nuisibles (501).

10. Le dispositif de surveillance selon la revendication 1, dans lequel le dispositif de gestion des organismes nuisibles comprend un support de surveillance des organismes nuisibles, et dans lequel le dispositif de surveillance est configuré pour être couplé au support de surveillance des organismes nuisibles.

11. Un système de gestion des organismes nuisibles comprenant :
une station de gestion des organismes nuisibles (501), la station de gestion des organismes nuisibles comprenant :
une partie de base ; et
une partie de couvercle ; et
le dispositif de surveillance selon l'une quelconque des revendications 1-6 configuré pour être couplé à la station de gestion des organismes nuisibles (501).

12. Le système de gestion des organismes nuisibles selon la revendication 7, comprenant en outre un serveur (602, 552, 652,1452) configuré pour communiquer avec le dispositif de surveillance.

13. Le système de gestion des organismes nuisibles selon la revendication 7 :
comprenant en outre un support qui est configuré pour recevoir au moins une partie de la station de base (110, 210, 510, 710), de la station secondaire (140, 240, 540, 640, 740), ou des deux, et
dans lequel le support est configuré pour être couplé à la station de gestion des organismes nuisibles (510).

14. Un serveur comprenant :
une interface de communication ;
un processeur ; et
une mémoire couplée au processeur, le processeur étant configuré pour exécuter des instructions stockées dans la mémoire afin d'amener le processeur à :
lancer la transmission d'un message de demande d'image à un ou plusieurs dispositifs de surveillance tels que revendiqués dans l'une quelconque des revendications 1 à 10 ;
recevant des données d'image en provenance d'un dispositif de surveillance particulier parmi les un ou plusieurs dispositifs de surveillance ;
analysant les données d'image sur la base de données d'identification d'organismes nuisibles, les données d'identification d'organismes nuisibles étant générées sur la base de l'intelligence artificielle ; et
produisant une indication sur la base de l'analyse des données d'image.

15. Le serveur selon la revendication 14, dans lequel la production de l'indication comprend lancer la transmission d'un message de notification à un dispositif client associé au dispositif de surveillance particulier sur la base de la détermination que les données d'image indiquent qu'un organisme nuisible est présent dans le dispositif de surveillance particulier.
